# EUROPEAN PATENT APPLICATION

(11) **EP 3 627 779 A1**
(43) Date of publication of application: **25.03.2020**
(21) Application number: 18823600.4
(22) Date of filing: 28.06.2018
(51) Int. Cl.: H04L 12/703

(54) **PATH DATA DELETION METHOD, AND MESSAGE FORWARDING METHOD AND APPARATUS**

(30) Priority: 30.06.2017 CN 201710525083
(71) Applicant: Huawei Technologies Co., Ltd., Longgang District Shenzhen, Guangdong 518129 (CN)
(72) Inventor: SUN, Dongzhi, Shenzhen Guangdong 518129 (CN); QIN, Jun, Shenzhen Guangdong 518129 (CN); WEI, Xiugang, Shenzhen Guangdong 518129 (CN); DONG, Jie, Shenzhen Guangdong 518129 (CN)
(74) Representative: Maiwald Patent- und Rechtsanwaltsgesellschaft mbH
(86) International application number: PCT/CN2018/093247
(87) International publication number: WO 2019/001487

(57) **Abstract**

Embodiments of this application disclose a path data deletion method, a message forwarding method, and an apparatus. A controller may obtain an identifier of an invalid path from a network node located on the invalid path, may determine, based on the identifier of the invalid path and a first network node providing the identifier of the invalid path, at least a second network node located on the invalid path, and send a path deletion message to the second network node, so that the second network node can delete originally stored path data related to the invalid path. Therefore, the following case is avoided: The second network node wastes storage space in storing invalid path data. The controller may assist in cleaning invalid path data remaining in a network node, so that it is possible to disable periodic path data synchronization of a network node in a mechanism of the RSVP-TE. In addition, because path data that is of an invalid path and that may remain in a network node is cleaned, abnormal data forwarding that may occur is avoided, and system stability is improved.

## Description

This application claims priority to Chinese Patent Application No. 201710525083.X, filed with the China National Intellectual Property Administration on June 30, 2017 and entitled "PATH DATA DELETION METHOD, MESSAGE FORWARDING METHOD, AND APPARATUS", which is incorporated herein by reference in its entirety.

### TECHNICAL FIELD

This application relates to the data processing field, and in particular, to a path data deletion method, a message forwarding method, and an apparatus.

### BACKGROUND

A resource reservation protocol-traffic engineering (Resource Reservation Protocol-Traffic Engineering, RSVP-TE) is widely applied to various networks, to provide path-related services for network nodes in the networks. A path herein may include a data transmission channel between network nodes. For example, in a mechanism of the RSVP-TE, a network node may periodically synchronize path-related data, for example, a path state block (Path State Block, PSB) and a reservation state block (Reservation State Block, RSB), with an adjacent network node of the network node based on a network connection architecture.

The mechanism of periodically synchronizing path data consumes a system resource of the network node. When the network has a relatively large scale, a network node having many neighborhood relationships needs to consume a large quantity of system resources for synchronization, significantly affecting a normal data processing capability of the network node. As a result, the RSVP-TE cannot be deployed in the large-scale network, and an applicable range of the RSVP-TE is narrowed.

### SUMMARY

However, based on periodic data synchronization in a mechanism of an RSVP-TE, invalid path data stored in a network node can be effectively deleted, for example, path data of a closed path or an expired path, to improve storage efficiency of the network node. Therefore, if a mechanism of periodically synchronizing path data in the RSVP-TE is disabled to save a system resource of the network node, although the system resource of the network node may be saved because path data does not need to be periodically synchronized, there may be more invalid path data stored in the network node, reducing the storage efficiency of the network node. In addition, path data of an invalid path may further cause function abnormality of the network node. For example, the path data of the invalid path is incorrectly used for incorrect data forwarding.

It can be learned that for the RSVP-TE, when the network node no longer periodically synchronizes path data, if invalid path data stored in the network node can be effectively deleted, there is no obstacle for deploying the RSVP-TE in a large-scale network, to extend an applicable range of the RSVP-TE.

Embodiments of this application provide a path data deletion method, a message forwarding method, and an apparatus, to avoid abnormal data forwarding that may occur, and improve system stability.

According to a first aspect, an embodiment of this application provides a path data deletion method, applied to a network in which an RSVP-TE is deployed, where the network includes a controller and a plurality of network nodes, the plurality of network nodes include a first network node and a second network node, and the method includes:
obtaining, by the controller, an identifier of an invalid path from the first network node, where the first network node is a network node on the invalid path;
determining, by the controller, the second network node based on the identifier of the invalid path, where the second network node is a network node on the invalid path; and
sending, by the controller, a path deletion message to the second network node, where the path deletion message is used to instruct to delete path data related to the invalid path.

It can be learned that to avoid a problem that in a mechanism of the RSVP-TE, invalid path data may remain in a network node because the network node periodically synchronizes path data, the controller may obtain the identifier of the invalid path from the network node located on the invalid path, and may determine, based on the identifier of the invalid path and the first network node providing the identifier of the invalid path, at least the second network node located on the invalid path, and the controller may send the path deletion message to the second network node, so that the second network node deletes the originally stored path data related to the invalid path. Therefore, the following case is avoided: The second network node wastes storage space in storing invalid path data. The controller may assist in cleaning invalid path data remaining in a network node, so that it is possible to disable periodic path data synchronization of the network node in the mechanism of the RSVP-TE. Therefore, the network node in the network in which the RSVP-TE is deployed does not need to consume a resource to periodically synchronize path data with a neighboring network node, and with assistance of the controller, does not waste storage space in storing the path data of the invalid path. There is no obstacle for deploying the RSVP-TE in a large-scale network, to extend an applicable range of the RSVP-TE. In addition, because path data that is of an invalid path and that may remain in a network node is cleaned, abnormal data forwarding that may occur is avoided, and system stability is improved.

Optionally, the second network node is a network node adjacent to the first network node on the invalid path.

In some application scenarios, the controller may determine an adjacent network node and send the path deletion message to the adjacent network node. For ease of implementation of the controller, in some application scenarios, the controller may alternatively determine a plurality of network nodes including an adjacent network node, and separately send the path deletion message to the plurality of network nodes. This includes an implementable manner.

Optionally, the first network node is an initial network node in a forwarding direction of the invalid path, and the obtaining, by the controller, an identifier of an invalid path from the first network node includes:
obtaining, by the controller, a path report message sent by the first network node, where the path report message is used to indicate that the invalid path needs to be deleted, and the path report message includes the identifier of the invalid path.

In some application scenarios, there is a PCEP connection between a head node on the invalid path and the controller, and the head node may earlier learn that the path on which the head node is located has become an invalid path. Therefore, the controller may more quickly obtain the identifier of the invalid path by using the path report message.

Optionally, after the sending, by the controller, a path deletion message to the second network node, the method further includes:
determining, by the controller, whether the second network node is a last network node in the forwarding direction of the invalid path;
if the second network node is not the last network node, determining an identifier of a third network node based on a topology structure of the invalid path, where the third network node is a next network node of the second network node in the forwarding direction of the invalid path; and
using the third network node as the second network node, and continuing to perform a step in which the controller determines an address of the second network node based on an identifier of the second network node.

In some application scenarios, the controller needs to sequentially send the path deletion message to network nodes on the invalid path. In a sending process, the controller needs to determine whether a network node currently receiving the path deletion message is the last network node on the invalid path. Therefore, the following case is avoided: The controller sends, by mistake, the path deletion message to a network node that is not located on the invalid path, to improve reliability of sending the path deletion message by the controller.

Optionally, the determining, by the controller, the second network node based on the identifier of the invalid path includes:
determining, by the controller, the topology structure of the invalid path based on the identifier of the invalid path;
determining, by the controller, the identifier of the second network node based on the topology structure, where the second network node is a next network node of the first network node in the forwarding direction of the invalid path; and
determining, by the controller, the address of the second network node based on the identifier of the second network node; and
the sending, by the controller, a path deletion message to the second network node includes:
   sending, by the controller, the path deletion message to the second network node based on the address of the second network node.

In some application scenarios, the controller may find an identifier of a next-hop network node by using the identifier of the invalid path, and determine an address of the network node by using the identifier of the network node, and the controller may send the path deletion message to the determined address, to improve accuracy of sending the path deletion message.

Optionally, the determining, by the controller, the second network node based on the identifier of the invalid path includes:
searching for, by the controller, addresses of the plurality of network nodes in the network; and
the sending, by the controller, a path deletion message to the second network node includes:
   sending, by the controller, the path deletion message to the plurality of network nodes based on the addresses of the plurality of network nodes.

In some application scenario, because a system includes a relatively small quantity of network nodes, the controller may not need to obtain an accurate address of a network node that needs to receive the path deletion message, but performs group-sending in the system. Because the system includes the relatively small quantity of network nodes, a relatively small quantity of resources of the controller are consumed in this sending manner, to improve efficiency of sending the path deletion message.

Optionally, the first network node is a network node other than an initial network node in a forwarding direction of the invalid path, and the obtaining, by the controller, an identifier of an invalid path from the first network node includes:
obtaining, by the controller, a path report message sent by the first network node, where the path report message is used to indicate that the invalid path needs to be deleted, and the path report message includes the identifier of the invalid path.

In some application scenarios, a network node sending the identifier of the invalid path to the controller is an intermediate node on the invalid path, to increase a possible way of obtaining the identifier of the invalid path by the controller.

Optionally, the obtaining, by the controller, a path report message sent by the first network node includes:
if a fault occurs on a path between the second network node and the first network node on the invalid path, obtaining, by the controller, the path report message sent by the first network node.

In some application scenarios, an intermediate node on the invalid path may further determine a fault on a part of the invalid path, and send the path report message to the controller when determining the fault, to improve efficiency of finding the invalid path by the controller.

Optionally, the method further includes:
obtaining, by the controller, a delegation message sent by a fourth network node, where the delegation message includes an address of the fourth network node and path data of a path on which the fourth network node is located, and the fourth network node is a network node other than the initial network node in the forwarding direction of the invalid path;
determining, by the controller based on the path data of the path on which the fourth network node is located, whether the fourth network node includes the path data of the invalid path; and
if the fourth network node includes the path data of the invalid path, sending, by the controller, the path deletion message to the fourth network node.

In some application scenarios, a network node in the system may delegate, to the controller, path data related to the network node, and if the delegated path data includes the path data of the invalid path, the controller may find the path data of the invalid path and send the path deletion message to the network node, to improve efficiency of deleting the path data of the invalid path.

Optionally, the controller obtains the delegation message after obtaining the path report message.

If the controller finds the path data of the invalid path in the delegation network node, generally, before the network node performs delegation, the controller may learn of information that is about the invalid path and that needs to be deleted.

Optionally, a fifth network node is the initial network node in the forwarding direction of the invalid path, and the method further includes:
obtaining, by the controller, a path change message sent by the fifth network node, where the path change message includes a topology structure of a changed path, the changed path is obtained by changing the invalid path, and an identifier of the changed path is the same as the identifier of the invalid path;
determining, by the controller through comparison, a distinctive part of the invalid path different from the changed path;
determining, by the controller, a network node located on the distinctive part; and
sending, by the controller, the path deletion message to the network node located on the distinctive part.

In some application scenarios, the system changes a path to some extent, and a changed path still uses an identifier of the original path. In this case, the controller may obtain a path change message, to determine a changed part by comparing topologies of new and old paths, and send the path deletion message only to a network node on the distinctive part of the invalid path different from the changed path, to improve deletion efficiency and save the system resource of the controller.

Optionally, the path report message or the delegation message is a path computation report PCRpt message, the PCRpt message includes a path field and a label switched path LSP object field, the path field is set to be optional, the LSP object field includes a flag bit, and the flag bit is used to identify whether a network node sending the PCRpt message is a network node other than an initial network node in a forwarding direction of a path.

A message in an existing format is used as the path report message or the delegation message, to improve system stability.

Optionally, the path deletion message is a path computation update PCUpd message, the PCUpd message includes a path field and a label switched path LSP object field, the path field is set to be optional, the LSP object field includes a flag bit, and the flag bit is used to identify whether a network node receiving the PCUpd message is a network node other than an initial network node in a forwarding direction of a path.

A message in an existing format is used as the path report message or the delegation message, to improve system stability.

According to a second aspect, an embodiment of this application provides a path data deletion controller, applied to a network in which an RSVP-TE is deployed, where the network includes the controller and a plurality of network nodes, the plurality of network nodes include a first network node and a second network node, and the controller includes an obtaining unit, a determining unit, and a sending unit, where
the obtaining unit is configured to obtain an identifier of an invalid path from the first network node, where the first network node is a network node on the invalid path;
the determining unit is configured to determine the second network node based on the identifier of the invalid path, where the second network node is a network node on the invalid path; and
the sending unit is configured to send a path deletion message to the second network node, where the path deletion message is used to instruct to delete path data related to the invalid path.

For beneficial effects of the parts of the second aspect, refer to the descriptions in the first aspect, and details are not described herein again.

Optionally, the second network node is a network node adjacent to the first network node on the invalid path.

Optionally, the first network node is an initial network node in a forwarding direction of the invalid path, and the obtaining unit is further configured to obtain a path report message sent by the first network node, where the path report message is used to indicate that the invalid path needs to be deleted, and the path report message includes the identifier of the invalid path.

Optionally, the controller further includes a judging unit, where
the judging unit is configured to: determine whether the second network node is a last network node in the forwarding direction of the invalid path, and if the second network node is not the last network node, trigger the determining unit; and
the determining unit is configured to: determine an identifier of a third network node based on a topology structure of the invalid path, where the third network node is a next network node of the second network node in the forwarding direction of the invalid path; and use the third network node as the second network node, and trigger the judging unit.

Optionally, the determining unit is further configured to: determine the topology structure of the invalid path based on the identifier of the invalid path; determine an identifier of the second network node based on the topology structure, where the second network node is a next network node of the first network node in the forwarding direction of the invalid path; and determine an address of the second network node based on the identifier of the second network node; and
the sending unit is further configured to send the path deletion message to the second network node based on the address of the second network node.

Optionally, the determining unit is further configured to search for addresses of the plurality of network nodes in the network; and
the sending unit is further configured to send the path deletion message to the plurality of network nodes based on the addresses of the plurality of network nodes.

Optionally, the first network node is a network node other than an initial network node in a forwarding direction of the invalid path, and the obtaining unit is further configured to obtain a path report message sent by the first network node, where the path report message is used to indicate that the invalid path needs to be deleted, and the path report message includes the identifier of the invalid path.

Optionally, the obtaining unit is further configured to: if a fault occurs on a path between the second network node and the first network node on the invalid path, obtain the path report message sent by the first network node.

Optionally, the controller further includes a judging unit, where
the obtaining unit is further configured to obtain a delegation message sent by a fourth network node, where the delegation message includes an address of the fourth network node and path data of a path on which the fourth network node is located, and the fourth network node is a network node other than the initial network node in the forwarding direction of the invalid path;
the judging unit is configured to: determine, based on the path data of the path on which the fourth network node is located, whether the fourth network node includes the path data of the invalid path; and if the fourth network node includes the path data of the invalid path, trigger the sending unit; and
the sending unit is further configured to send the path deletion message to the fourth network node.

Optionally, the obtaining unit obtains the delegation message after obtaining the path report message.

Optionally, a fifth network node is the initial network node in the forwarding direction of the invalid path, and the controller further includes a comparison unit, where
the obtaining unit is further configured to obtain a path change message sent by the fifth network node, where the path change message includes a topology structure of a changed path, the changed path is obtained by changing the invalid path, and an identifier of the changed path is the same as the identifier of the invalid path;
the comparison unit is configured to: determine, through comparison, a distinctive part of the invalid path different from the changed path; and determine a network node located on the distinctive part; and
the sending unit is further configured to send the path deletion message to the network node located on the distinctive part.

Optionally, the path report message or the delegation message is a path computation report PCRpt message, the PCRpt message includes a path field and a label switched path LSP object field, the path field is set to be optional, the LSP object field includes a flag bit, and the flag bit is used to identify whether a network node sending the PCRpt message is a network node other than an initial network node in a forwarding direction of a path.

Optionally, the path deletion message is a path computation update PCUpd message, the PCUpd message includes a path field and a label switched path LSP object field, the path field is set to be optional, the LSP object field includes a flag bit, and the flag bit is used to identify whether a network node receiving the PCUpd message is a network node other than an initial network node in a forwarding direction of a path.

According to a third aspect, an embodiment of this application provides a message forwarding method, applied to a network in which an RSVP-TE is deployed, where the network includes a controller and a plurality of network nodes, the plurality of network nodes include a first network node and a second network node, and the method includes:
obtaining, by the controller from the first network node, a transfer message carrying an identifier of the second network node, where the first network node and the second network node are network nodes on a same path; and
forwarding, by the controller, the transfer message to the second network node based on the identifier of the second network node.

It can be learned that the controller may not need to recognize content of the transfer message, and only needs to forward the transfer message to a specified network node, to improve forwarding efficiency of the controller. In addition, because a connection between the controller and a network node in a system is relatively stable, a possibility of successfully sending the transfer message to the second network node is increased to some extent.

Optionally, the forwarding, by the controller, the transfer message to the second network node based on the identifier of the second network node includes:
determining, by the controller, an address of the second network node based on the identifier of the second network node; and
forwarding, by the controller, the transfer message to the address of the second network node.

The address of the second network node is determined, to improve accuracy of forwarding the transfer message by the controller.

Optionally, the transfer message is sent by the first network node when the path becomes an invalid path.

When the path on which the first network node and the second network node are located becomes the invalid path, a message cannot be directly sent between the first network node and the second network node, but the transfer message sent by the first network node can still be forwarded to the second network node through forwarding of the controller, to improve stability and reliability of the system.

Optionally, the transfer message is sent when a path deletion message sent by the first network node to the second network node is lost.

When the path on which the first network node and the second network node are located becomes the invalid path, a message cannot be directly sent between the first network node and the second network node, but the transfer message sent by the first network node can still be forwarded to the second network node through forwarding of the controller, to improve stability and reliability of the system.

Optionally, the method further includes:
obtaining, by the controller, an acknowledgement message returned by the second network node, where the acknowledgement message is used to identify that the second network node has received the transfer message, and the acknowledgement message carries an identifier of the first network node.

The acknowledgement message is obtained, so that the controller can clearly determine that the transfer message has been successfully sent to the second network node.

Optionally, the method further includes:
sending, by the controller, the acknowledgement message to the first network node based on the identifier of the first network node.

The controller may further forward the acknowledgement message to the first network node, so that the first network node clearly determines that the transfer message has been successfully sent to the second network node.

Optionally, the transfer message or the acknowledgement message is a path computation notify with data PCNtf with Data message, an optional type length value field in the PCNtf with Data message includes a destination address field and an opaque data field, the destination address field is used to carry an identifier of a network node receiving the PCNtf with Data message, and the opaque data field is used to carry a message that needs to be received by the network node receiving the PCNtf with Data message.

A message in an existing format is used as the path report message or the delegation message, to improve system stability.

According to a fourth aspect, an embodiment of this application provides a message forwarding controller, applied to a network in which an RSVP-TE is deployed, where the network includes the controller and a plurality of network nodes, the plurality of network nodes include a first network node and a second network node, and the controller includes an obtaining unit and a forwarding unit, where
the obtaining unit is configured to obtain, from the first network node, a transfer message carrying an identifier of the second network node, where the first network node and the second network node are network nodes on a same path; and
the forwarding unit is configured to forward the transfer message to the second network node based on the identifier of the second network node.

For beneficial effects of the parts of the second aspect, refer to the descriptions in the first aspect, and details are not described herein again.

Optionally, the forwarding unit is further configured to: determine an address of the second network node based on the identifier of the second network node, and forward the transfer message to the address of the second network node.

Optionally, the transfer message is sent by the first network node when the path becomes an invalid path.

Optionally, the transfer message is sent when a path deletion message sent by the first network node to the second network node is lost.

Optionally, the obtaining unit is further configured to obtain an acknowledgement message returned by the second network node, where the acknowledgement message is used to identify that the second network node has received the transfer message, and the acknowledgement message carries an identifier of the first network node.

Optionally, the forwarding unit is further configured to send the acknowledgement message to the first network node based on the identifier of the first network node.

Optionally, the transfer message or the acknowledgement message is a path computation notify with data PCNtf with Data message, an optional type length value field in the PCNtf with Data message includes a destination address field and an opaque data field, the destination address field is used to carry an identifier of a network node receiving the PCNtf with Data message, and the opaque data field is used to carry a message that needs to be received by the network node receiving the PCNtf with Data message.

It can be learned from the foregoing technical solutions that the embodiments of this application have the following advantages:
To avoid a problem that in a mechanism of the RSVP-TE, invalid path data may remain in a network node because the network node periodically synchronizes path data, the controller may obtain the identifier of the invalid path from the network node located on the invalid path, and may determine, based on the identifier of the invalid path and the first network node providing the identifier of the invalid path, at least the second network node located on the invalid path, and the controller may send the path deletion message to the second network node, so that the second network node deletes the originally stored path data related to the invalid path. Therefore, the following case is avoided: The second network node wastes storage space in storing invalid path data. The controller may assist in cleaning invalid path data remaining in a network node, so that it is possible to disable periodic path data synchronization of the network node in the mechanism of the RSVP-TE. Therefore, the network node in the network in which the RSVP-TE is deployed does not need to consume a resource to periodically synchronize path data with a neighboring network node, and with assistance of the controller, does not waste storage space in storing the path data of the invalid path. There is no obstacle for deploying the RSVP-TE in a large-scale network, to extend an applicable range of the RSVP-TE. In addition, because path data that is of an invalid path and that may remain in a network node is cleaned, abnormal data forwarding that may occur is avoided, and system stability is improved.

### BRIEF DESCRIPTION OF DRAWINGS

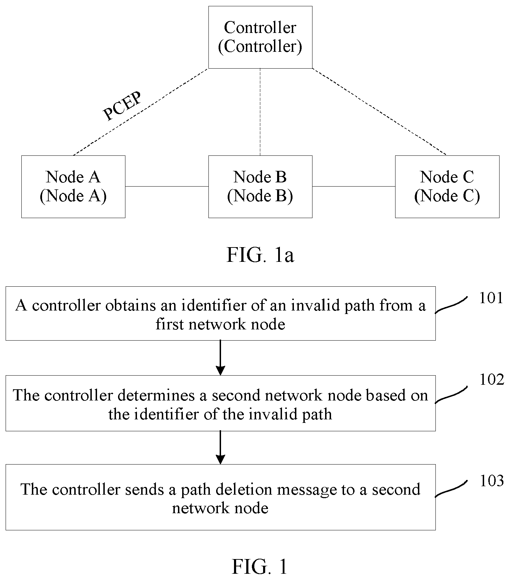

FIG. 1a is a schematic diagram of connections between a controller and network nodes according to an embodiment of this application;
FIG. 1 is a method flowchart of a path data deletion method according to an embodiment of this application;
FIG. 2 is a schematic diagram of a PCUpd message format and a PCUpd message format that is provided in an embodiment of this application;
FIG. 3A and FIG. 3B are a schematic diagram of an LSP object field format and an LSP object field format that is provided in an embodiment of this application;
FIG. 4 is a schematic diagram of a PCRpt message format and a PCRpt message format that is provided in an embodiment of this application;
FIG. 5 is a schematic diagram of connections between a controller and network nodes according to an embodiment of this application;
FIG. 6 is a method flowchart of determining a second network node according to an embodiment of this application;
FIG. 7 is a schematic diagram of connections between a controller and network nodes in an application scenario according to an embodiment of this application;
FIG. 8 is a signaling diagram between a controller and network nodes in an application scenario according to an embodiment of this application;
FIG. 9 is a schematic diagram of connections between a controller and network nodes according to an embodiment of this application;
FIG. 10 is a method flowchart of sending a path deletion message to an intermediate node according to an embodiment of this application;
FIG. 11a is a signaling diagram between a controller and network nodes in an application scenario according to an embodiment of this application;
FIG. 11b is a signaling diagram between a controller and network nodes in an application scenario according to an embodiment of this application;
FIG. 11c is a signaling diagram between a controller and network nodes in an application scenario according to an embodiment of this application;
FIG. 12 is a method flowchart of sending a path deletion message by comparing path topologies according to an embodiment of this application;
FIG. 13 is a schematic diagram of connections between a controller and network nodes in an application scenario according to an embodiment of this application;
FIG. 14 is a method flowchart of a message forwarding method according to an embodiment of this application;
FIG. 15a is a schematic diagram of a PCNtf with Data message format according to an embodiment of this application;
FIG. 15b is a schematic diagram of a destination address field format according to an embodiment of this application;
FIG. 15c is a schematic diagram of a destination address field format according to an embodiment of this application;
FIG. 16 is a schematic diagram of connections between a controller and network nodes according to an embodiment of this application;
FIG. 17 is a schematic diagram of connections between a controller and network nodes in an application scenario according to an embodiment of this application;
FIG. 18 is a signaling diagram between a controller and network nodes in an application scenario according to an embodiment of this application;
FIG. 19 is an apparatus structural diagram of a path data deletion apparatus according to an embodiment of this application;
FIG. 20 is an apparatus structural diagram of a message forwarding apparatus according to an embodiment of this application;
FIG. 21 is a schematic hardware structural diagram of a controller according to an embodiment of this application; and
FIG. 22 is a schematic hardware structural diagram of a controller according to an embodiment of this application.

### DESCRIPTION OF EMBODIMENTS

The following describes the embodiments of this application with reference to the accompanying drawings.

In a mechanism of a conventional RSVP-TE, a network node needs to periodically synchronize path-related data to an adjacent network node of the network node based on a network connection architecture. When a network has a relatively large scale, a network node in the network has many adjacent network nodes. If the conventional RSVP-TE is deployed in the network, the network node in the network needs to consume a large quantity of system resources to periodically synchronize path data, evidently affecting the network node in providing a normal service at least in a data synchronization process. It can be learned that the conventional RSVP-TE is not suitable for the network having the relatively large scale.

However, if a mechanism of periodically synchronizing path data in the RSVP-TE is directly disabled, path data stored in a network node cannot be updated. For example, if a path has been deleted (down), and some network nodes on the path may not know the status due to a link failure, the network nodes continue to store path data of the path, that is, the path data that has already been invalid actually, and the remaining path data evidently wastes storage space of the network nodes. In addition, the path data remaining in the network nodes may further cause function abnormality of the network nodes. For example, a network node stores path data of an invalid path, and a correspondence is established between an identifier of the invalid path and a new path. The new path may be obtained by changing the original invalid path. Then, when the network node obtains, from a path whose identifier is the identifier of the invalid path, data that needs to be forwarded, the network node may forward the data by using the path data of the invalid path. As a result, the data is forwarded to an incorrect network node, reducing system stability.

If the problem caused due to remaining path data is not resolved, the mechanism of periodically synchronizing path data in the RSVP-TE cannot be directly disabled. If the mechanism of periodically synchronizing path data in the RSVP-TE is not disabled, an applicable scope of the RSVP-TE is limited. It can be learned that after the mechanism of periodically synchronizing path data in the RSVP-TE is disabled, how to delete remaining path data in a network node is a technical problem that urgently needs to be resolved.

The embodiments of this application provide a path data deletion method and a message forwarding method. The path data deletion method and the message forwarding method are applied to a network in which the RSVP-TE is deployed. The RSVP-TE is improved in the embodiments of this application. A mechanism in which a network node needs to periodically synchronize path data with an adjacent network node is disabled, and a mechanism in which a controller in the network assists a network node in deleting stored path data of an invalid path is introduced.

In the embodiments of this application, the network in which the RSVP-TE provided in the embodiments of this application is deployed may be an IP core (IP Core) network or a generalized multiprotocol label switching (Generalized Multiprotocol Label Switching, GMPLS) network. A quantity of network nodes included in the network is not limited. In other words, the RSVP-TE provided in the embodiments of this application may be deployed in a large-scale network. The network node may be a collective name of a processing device and a forwarding device used in the network, and may be a server, a router, a switch, or the like.

The network to which the embodiments of this application are applied further includes a controller (Controller). One controller may be connected to at least one network node in the network, and is configured to control the connected network node. A connection relationship between the controller and the at least one network node may be shown in FIG. 1a. In the embodiments of this application, if the at least one network node includes an initial network node that is located on a path and that is in a forwarding direction of the path, a path computation element communication protocol (Path Computation Element Communication Protocol, PCEP) path may be established between the controller and the network node, for example, a PCEP path established between the controller (Controller) and a node A (Node A) in FIG. 1a. According to an improvement solution provided in the embodiments of this application, the controller may assist a network node in deleting path data that is of an invalid path and that is stored in the network node. The path (Path) in the embodiments of this application may include types such as a data link and a tunnel (Tunnel), and for example, may include a label switched path (Label Switched Path, LSP). One path may include at least two network nodes. For example, a path 1 may connect a network node a, a network node b, and a network node c, and a forwarding direction is from the network node a, to the network node b, and then to the network node c. The network node a, the network node b, and the network node c are network nodes located on the path, and each network node located on the path 1 may store path data of the path. For example, the network node b may store data related to the path such as a path identifier and inbound and outbound interface information of the path in the network node b.

The invalid path may be a path that no longer uses a forwarding function or that no longer has a forwarding function, for example, a deleted path, an expired path, or a path on which a fault occurs. For example, after the path 1 is deleted, the path 1 becomes an invalid path. If the network node b still stores the path data of the path 1, the path data may be considered as path data related to an invalid path. When the path 1 has become the invalid path, if the network node b still stores the path data, because the path data no longer has an actual function, and it is equivalent to that the path data of the path 1 remains, that the network node b continues to store the path data that does not have an actual function is equivalent to that the network node b wastes storage space of the network node b, and the path data needs to be deleted under an instruction. In the embodiments of this application, the controller may instruct the network node b to delete the path data.

### Embodiment 1

With reference to the accompanying drawings, the following describes a path data deletion method provided in this embodiment of this application. A network to which the method is applied includes a plurality of network nodes, for example, a first network node and a second network node in the following. The network to which the method is applied further includes a controller.

FIG. 1 is a method flowchart of the path data deletion method according to this embodiment of this application. The method includes the following steps.

101. The controller obtains an identifier of an invalid path from the first network node.

This application does not limit a manner in which the controller obtains the identifier of the invalid path, and specifies only that the identifier of the invalid path is obtained from a network node on the invalid path, that is, the first network node. The identifier of the invalid path may have a function of uniquely identifying the invalid path. For example, when the invalid path is an LSP, the identifier of the invalid path may be an ID of the LSP.

The first network node may be a network node on the invalid path, and which specific network node on the invalid path is the first network node may depend on a connection relationship between a network node on the invalid path and the controller and a specific application scenario. This part is to be described in detail in the following embodiment. When the controller obtains the identifier of the invalid path from the first network node, it means that the path identified by the identifier has become an invalid path. Alternatively, when a path becomes an invalid path, the controller obtains an identifier of the invalid path from the first network node. It should be noted that because the identifier of the invalid path is provided by the first network node for the controller, and it is equivalent to that the first network node has specified that the identifier provided for the controller is used to identify an invalid path, generally, the first network node has deleted path data that is related to the invalid path and that is stored in the first network node.

102. The controller determines the second network node based on the identifier of the invalid path.

Because the second network node is also located on the invalid path as the first network node, it is possible that the second network node still stores the path data of the invalid path. In consideration of this possibility, to avoid a waste of storage space of the second network node, the controller needs to instruct the second network node to delete the path data of the invalid path, or the controller needs to determine that the second network node has deleted the path data of the invalid path.

This embodiment of this application does not limit a position relationship between the second network node and the first network node on the invalid path, and each of the second network node and the first network node may be any network node on the invalid path. In an optional case, the second network node is a network node adjacent to the first network node. The adjacent position relationship may include at least two possibilities. In a first possibility, the second network node is a next hop (Hop) of the first network node in a forwarding direction of the invalid path, that is, the second network node is a next network node configured to receive data forwarded by the first network node. Then, the first network node and the second network node may be adjacent network nodes. Alternatively, in a second possibility, the first network node is a next hop of the second network node in a forwarding direction of the invalid path, that is, the first network node is a network node configured to receive data forwarded by the second network node. Then, the first network node and the second network node may be also adjacent network nodes.

The controller may clearly determine an address of a network node on the invalid path or a topology structure such as a record route object (Record Route Object, RRO) of the invalid path by using the identifier of the invalid path, to determine the second network node adjacent to the first network node on the invalid path.

In addition to the second network node, in some application scenarios, the controller may further determine another network node located on the invalid path, that is, can determine at least the second network node based on the identifier of the invalid path.

103. The controller sends a path deletion message to the second network node.

The controller may send the path deletion message to the second network node based on an address of the second network node. The address of the second network node may identify a specific position of the second network node in the network. If another network device such as the controller can learn of the address of the second network node, a message sent to the address of the second network node may be obtained by the second network node. An address of a network node may be an IP address of the network node, or may be a session address (Session ID) of the network node. The session address may be an address of a peer end of a PCEP session established between the controller such as a path computation element (path computation element, PCE) and a network node such as a path computation client (path computation client, PCC). A TCP connection is established between the PCE and the PCC. Session addresses of both a local end and a peer end of the connection may be represented by using IP addresses, which are similar to peer addresses in a border gateway protocol (Border Gateway Protocol, BGP).

The RSVP-TE is improved, so that the controller can send, to the second network node, the path deletion message used to instruct to delete the path data related to the invalid path. The path deletion message may be a message of an original type in the RSVP-TE. Alternatively, the path deletion message may be obtained by improving a message of an original type by improving the RSVP-TE. Alternatively, the path deletion message may be of a new message type generated by improving the RSVP-TE.

This embodiment of this application provides an optional manner. The RSVP-TE is improved, to improve a message of an original type: a path computation update (Path Computation Update, PCUpd) message, to obtain the path deletion message used to instruct a network node to delete path data of an invalid path.

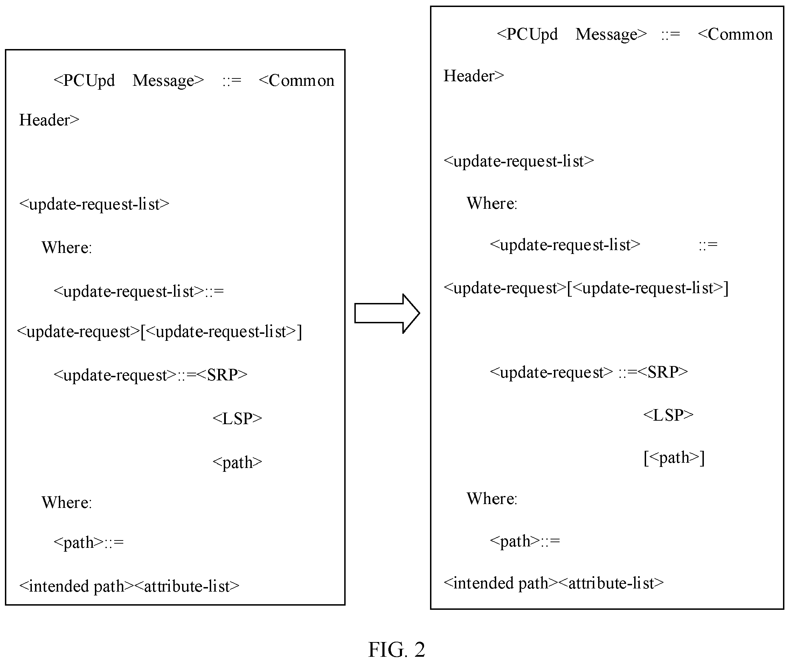

A format of a PCUpd message in the conventional RSVP-TE may be shown in the left part of FIG. 2, and a format of an improved PCUpd message may be shown in the right part of FIG. 2. The conventional PCUpd message is extended, to modify a path field <path> into an optional field [<path>]. The field herein may be in a format of a type length value (Type-length-value, TLV). When an LSP object field <LSP> carries an "R" flag bit, it identifies that the PCUpd message is used to indicate deletion (Remove). Because the path field <path> is an optional field, the path field may not need to be carried in the PCUpd message.

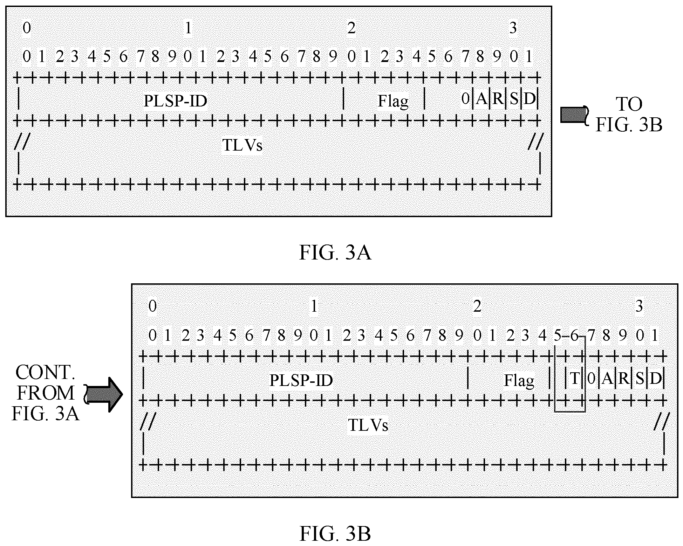

In addition, a new flag bit may be added to the LSP object field <LSP>, to identify whether a network node receiving the PCUpd message is a network node other than an initial network node in a forwarding direction of a path. For example, when a particular character is set in the new flag bit, it may be determined that the network node receiving the PCUpd message, for example, the second network node, is a network node other than the initial network node in the forwarding direction of the invalid path, namely, an intermediate node. When no character is set in the new flag bit, it may be determined that the network node receiving the PCUpd message, for example, the second network node, is the initial network node in the forwarding direction of the invalid path, namely, a head node. For modification of the LSP object field, refer to FIG. 3A and FIG. 3B. FIG. 3A shows a format of an LSP object field in the conventional RSVP-TE, and FIG. 3B shows a format of an improved LSP object field. It can be learned that a "T" flag bit is added to a right side of the LSP object field.

It should be noted that because one network node may be located on a plurality of paths, for example, a network node A may be located on a path 1: A→B→C, and may be also located on a path 2: D→A→E, when the controller sends the path deletion message to the second network node, the second network node needs to clearly know a specific path whose path data needs to be deleted. Therefore, the path deletion message may include the identifier of the invalid path, so that when the second network node obtains the path deletion message, the second network node can clearly know that path data related to an invalid path such as the path 2 in path data stored in the second network node needs to be deleted. Certainly, in addition to sending the path deletion message to the second network node, the controller may further send the path deletion message to another network node that is on the invalid path and that is determined in step 102. The path deletion message may be sequentially sent, or may be simultaneously sent. This is specifically related to a mechanism of determining a network node in step 102, or may be related to an application scenario. Details are not described herein.

It can be learned that to avoid a problem that in a mechanism of the RSVP-TE, invalid path data may remain in a network node because the network node periodically synchronizes path data, the controller may obtain the identifier of the invalid path from the network node located on the invalid path, and may determine, based on the identifier of the invalid path and the first network node providing the identifier of the invalid path, the second network node located on the invalid path, and the controller may send the path deletion message to the second network node, so that the second network node deletes the originally stored path data related to the invalid path. Therefore, the following case is avoided: The second network node wastes storage space in storing invalid path data. The controller may assist in cleaning invalid path data remaining in a network node, so that it is possible to disable periodic path data synchronization of the network node in the mechanism of the RSVP-TE. Therefore, the network node in the network in which the RSVP-TE is deployed does not need to consume a resource to periodically synchronize path data with a neighboring network node, and with assistance of the controller, does not waste storage space in storing the path data of the invalid path. There is no obstacle for deploying the RSVP-TE in a large-scale network, to extend an applicable range of the RSVP-TE. In addition, because path data that is of an invalid path and that may remain in a network node is cleaned, abnormal data forwarding that may occur is avoided, and system stability is improved.

The following describes in detail the first network node in step 101 with reference to a connection relationship between a network node on the invalid path and the controller and a specific application scenario.

This embodiment of this application provides at least two cases of positions of the first network node on the invalid path. In a first case, the first network node is a head node on the invalid path. In a second case, the first network node is an intermediate node on the invalid path. The head node may be an initial network node in a forwarding direction of a path, and the intermediate node may be a network node other than the head node on the path. For example, on a path 1 A→B→C, a head node is a network node A, and an intermediate node may be a network node B or a network node C.

The RSVP-TE is improved. Therefore, when the first network node is the head node, the first network node may send a path report message carrying the identifier of the invalid path to the controller; or when the first network node is the intermediate node, the first network node may send a delegation message carrying the identifier of the invalid path or a path report message carrying the identifier of the invalid path to the controller.

The path report message or the delegation message may be a message of an original type in the RSVP-TE. Alternatively, the path report message or the delegation message may be obtained by improving a message of an original type by improving the RSVP-TE. Alternatively, the path report message or the delegation message may be of a new message type generated by improving the RSVP-TE.

This embodiment of this application provides an optional manner. The RSVP-TE is improved, to improve a message of an original type: A path computation report (Path Computation report, PCRpt) message is improved, to obtain the path report message or the delegation message.

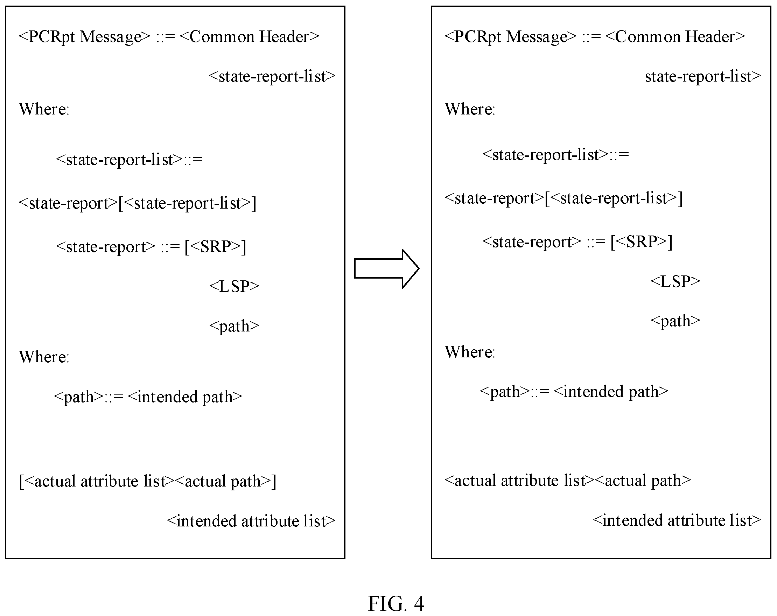

A format of a PCRpt message in the conventional RSVP-TE may be shown in the left part of FIG. 4, and a format of an improved PCRpt message may be shown in the right part of FIG. 4. The conventional PCRpt message is extended, to modify content carried in a path field <path> into optional [<intended_path> <actual_attribute_list> <actual_path> <intended _attribute_list>]. The field herein may be in a format of a type length value (Type-length-value, TLV). Because the path field <path> is an optional field, when the first network node is the intermediate node, the path report message or the delegation message sent to the controller may carry only an <actual_path> part in the path field <path>, and does not need to carry the other three parts. When an LSP object field <LSP> carries an "R" flag bit, it identifies that the PCRpt message is used to indicate deletion (Remove).

In addition, a new flag bit "T" may be further added to the LSP object field, and the flag bit is used to identify whether a network node sending the PCRpt message is an initial network node (a head node) in a forwarding direction of a path or a network node (an intermediate node) other than the initial network node in the forwarding direction of the path. For example, a character T may be filled in the flag bit to identify that the network node sending the PCRpt message is the intermediate node on the path; or no character is filled in the flag bit to identify that the network node sending the PCRpt message is the head node on the path.

The following describes a case in which the first network node is the head node on the invalid path.

In this case, for step 101, optionally, the controller may obtain the path report message sent by the first network node, where the path report message is used to indicate that the invalid path needs to be deleted, and the path report message includes the identifier of the invalid path.

There may be a plurality of scenarios in which the controller obtains, from the first network node, the path report message carrying the identifier of the invalid path. The following describes a relatively common scenario.

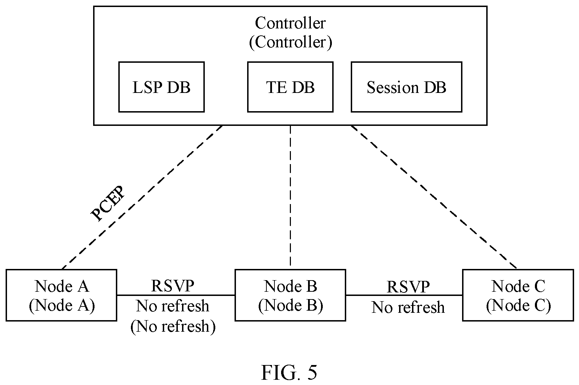

In this scenario, when the invalid path is still valid (referred to as the path 1), a data connection is established between the first network node and the controller, and the controller may collect related data of the path 1 by using the data connection. The connection relationship may be shown in FIG. 5. A path in a particular protocol, for example, a PCEP path, is established between the controller and a network node A (Node A) serving as the first network node. When the path 1 is deleted (referred to as an invalid path), the network node A may send a path report message to the controller, to notify the controller that the path 1 has currently become the invalid path. Before obtaining the path report message from the network node A, the controller may not need to learn whether a network node B (Node B) and a network node C (Node C) are located on the path 1, or the controller at most obtains information such as node identifiers of the network node B and the network node C by using an interior gateway protocol (Interior Gateway Protocol, IGP). Therefore, the controller cannot directly obtain addresses of nodes (for example, the network node B and the network node C) other than the head node on the invalid path by using the path report message reported by the network node A.

In this scenario, because the controller does not know the addresses of the network nodes included on the path 1 other than the first network node (the head node), when the controller receives the path report message sent by the first network node, the controller needs to determine the address of the second network node in a specific querying manner. Two manners are described in this embodiment of this application.

In a first manner of determining the second network node:

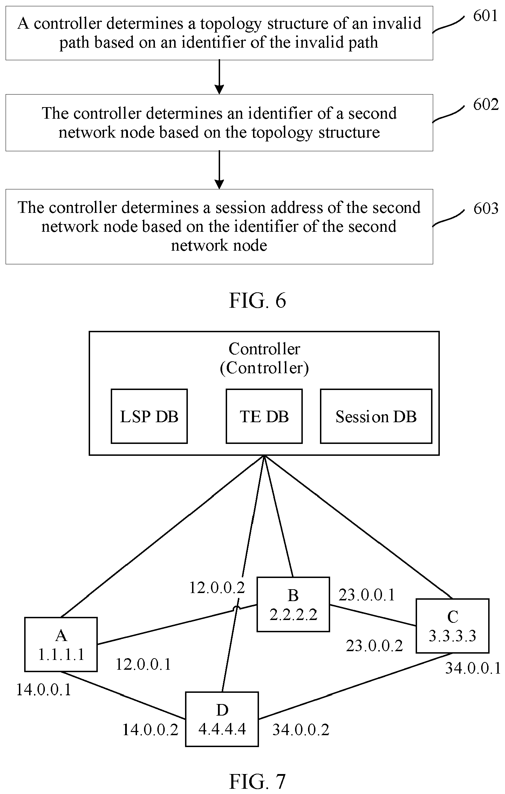

Optionally, FIG. 6 shows a procedure that may be included in step 102.

601. The controller determines a topology structure of the invalid path based on the identifier of the invalid path.

The topology structure of the invalid path may indicate a connection relationship and the forwarding direction of the invalid path, and may be, for example, an RRO corresponding to the invalid path. The controller may search, based on the identifier of the invalid path, an LSP DB stored in the controller for the RRO of the invalid path.

602. The controller determines an identifier of the second network node based on the topology structure.

After the RRO of the invalid path is determined, a forwarding direction and a sequence of network nodes on the invalid path may be clearly determined. For example, when the invalid path is: A→B→C, a network node B receives data forwarded by a network node A, a network node C receives the data forwarded by the network node B, and the network node B is equivalent to a next-hop network node of the network node A on the invalid path.

Because the controller obtains the path report message from the first network node, and the first network node is the head node on the invalid path, the controller may first determine the next-hop network node of the first network node on the invalid path from the RRO, to determine the second network node, where the second network node is a next network node of the first network node in the forwarding direction of the invalid path.

Subsequently, the controller may determine, based on the second network node obtained from the RRO, the identifier of the second network node such as a node IP of the second network node from a TE DB stored in the controller.

603. The controller determines an address of the second network node based on the identifier of the second network node.

The controller determines, based on the identifier of the second network node, the address of the second network node from a session (session) DB stored in the controller.

After obtaining the address of the second network node, the controller has a capability of sending a message to the second network node. Therefore, for step 103, the controller may send the path deletion message to the second network node based on the address of the second network node.

After sending the path deletion message to the second network node, the controller may determine whether the second network node is a last network node in the forwarding direction of the invalid path. If the second network node is the last network node, it is equivalent to that all network nodes on the invalid path are instructed to delete the path data of the invalid path. If the second network node is not the last network node, it means that there is another network node following the second network node in the forwarding direction of the invalid path. Therefore, after the controller sends the path deletion message to the second network node based on the address of the second network node, the method further includes:
determining, by the controller, whether the second network node is the last network node in the forwarding direction of the invalid path, and if the second network node is not the last network node, determining an identifier of a third network node based on the topology structure of the invalid path, where the third network node is a next network node of the second network node in the forwarding direction of the invalid path; and
using the third network node as the second network node, and continuing to perform step 602 and step 603 until it is determined that the second network node is the last network node in the forwarding direction of the invalid path.

It should be noted that that the controller determines whether the second network node is the last network node in the forwarding direction of the invalid path is implemented only based on the embodiment corresponding to FIG. 6 is not limited in this embodiment of this application. The determining may alternatively be implemented in another searching manner

### In a second manner of determining the second network node:

This determining manner is applicable to a network having a relatively small network scale. Because the identifier of the invalid path uniquely identifies the invalid path, the path deletion message carrying the identifier of the invalid path may be sent in the entire network, for example, sent to a plurality of network nodes or all network nodes in the entire network. When the path deletion message is sent to the plurality of network nodes, a case in which the second network node is determined inevitably occurs. In other words, the plurality of network nodes found by the controller from the network may include the second network node. When the path deletion message is sent to all the network nodes, the network nodes may inevitably include the second network node.

Therefore, in this manner, the controller searches for addresses of the plurality of network nodes in the network, and may obtain the addresses through determining from a session DB stored in the controller. For step 103, optionally, the controller sends the path deletion message to the plurality of network nodes based on the addresses of the plurality of network nodes.

With reference to specific application scenarios, the following further describes the case in which the first network node is the head node on the invalid path.

### In a first application scenario:

Refer to FIG. 7 for a connection relationship between each network node and a controller and path-related data in the scenario. As shown in FIG. 7, content of each database (Database, DB) stored in the controller may be shown in Table 1:

**Table 1**

| LSP DB | TE DB (topology) | Session (session) DB |
|---|---|---|
| LSP 1: | Node A: 1.1.1.1 | Session 1 1.1.1.1; |
| LSP ID: 1 | link: 12.0.0.1 | Session 2 2.2.2.2; |
| RRO (Current path): | Node B: 2.2.2.2 | Session 3 3.3.3.3; |
| 12.0.0.1; 12.0.0.2; | link: 12.0.0.2 23.0.0.1 | Session 4 4.4.4.4 |
| 2.2.2.2; 23.0.0.1; | Node C: 3.3.3.3 | |
| 23.0.0.2; 3.3.3.3 | link: 23.0.0.2 | |
| | Node D: 4.4.4.4 | |
| | link: 14.0.0.2 | |

It can be learned from the LSP DB in the controller that a current path (Current path) of an established (Up) path 1 may be 12.0.0.1→12.0.0.2→2.2.2.2→23.0.0.1→23.0.0.2→3.3.3.3. In other words, a path A→B→C in FIG. 5 is denoted as an LSP 1.

When the controller obtains a path report message from a network node A (the first network node), the controller determines that the LSP 1 has been deleted and has become an invalid path. The controller determines an RRO of the LSP 1 from the LSP DB based on an identifier of the LSP 1, determines, based on next hop information of the RRO, that a next-hop network node of the network node A on the invalid path is a network node B (the second network node), determines, from a TE DB, that an identifier of the network node B is 2.2.2.2, and determines, from a session DB, that an address of the network node B is 2.2.2.2, so that the controller can send a path deletion message to the address, to instruct the network node B to delete path data related to the LSP 1 (the invalid path). Subsequently, the controller may continue to determine a next-hop network node of the network node B, for example, a network node C, from the RRO of the LSP 1, and continue the foregoing process of determining an identifier and an address of a network node, to send the path deletion message to the network node C.

Therefore, after the LSP 1 is deleted, the path data that is related to the LSP 1 and that may remain in the network node B and the network node C is deleted with assistance of the controller.

### In a second application scenario:

In the RSVP-TE, when a path is invalidated, network nodes may exchange a path tear message and a resv tear message to instruct an adjacent network node to delete path data related to the invalid path. However, it is still necessary for a network node A to send a path report message to the controller. Areason is as follows: First, the controller needs to synchronize, for the invalid path, related data stored in the controller; and second, because a fault may occur on a part of a path, a network node or some network nodes may not learn that the path has been invalidated, and the network node or the network nodes still stores or store path data of the path.

Description is provided by using an example in which a fault may occur on a part of an invalid path. A path is an LSP 1: A→B→C→D, and a fault occurs on a path from a network node B to a network node C. When the path 1 becomes an invalid path, a path tear message sent by the network node B to the network node C is lost. As a result, the network node C does not learn that the LSP 1 has been invalid.

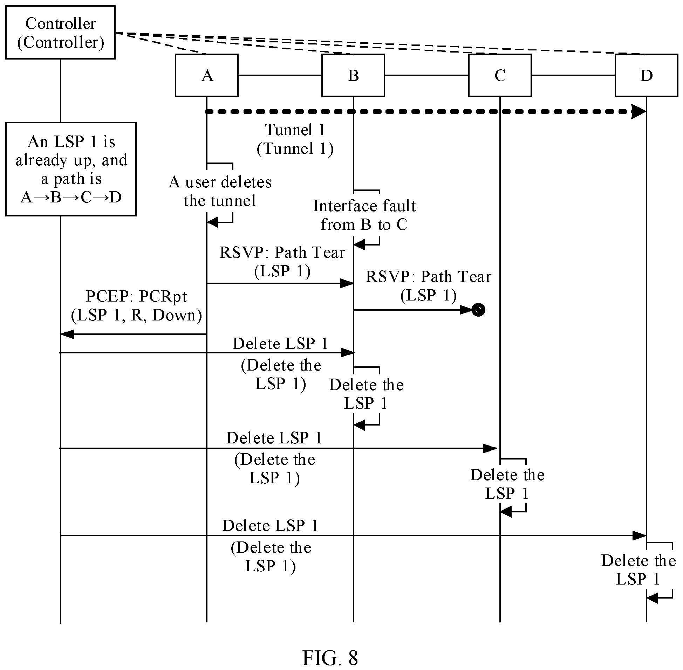

Refer to FIG. 8 for processing process. After the LSP 1 is established (Up), the controller may obtain path data of the LSP 1 from a network node A. Then, a user may delete the LSP 1, and the LSP 1 becomes an invalid path. The network node A serving as a head node, namely, the first network node may delete path data that is of the LSP 1 and that is stored in the network node A, and send an RSVP path tear (LSP 1) message to the network node B, to notify the network node B that the LSP 1 has been deleted. The network node B may delete path data related to the LSP 1, and the network node B continues to send the RSVP path tear (LSP 1) message to the network node C. However, because the fault occurs on the path B→C, the RSVP path tear (LSP 1) message sent by the network node B is lost, and cannot be sent to the network node C. As a result, the network node C and a network node D cannot learn that the LSP 1 has been deleted. Consequently, the network node C and the network node D still store the path data of the LSP 1.

When the network node A deletes the path data of the LSP 1, the network node A may further send a path report message, namely, a PCRpt message in FIG. 8, to the controller. The message carries an identifier of the LSP 1 and a flag bit (R) that indicates deletion of the LSP 1. When obtaining the PCRpt message, the controller clearly knows that the LSP 1 has become an invalid path, and may determine, based on the identifier of the LSP 1, that the network node B, the network node C, and the network node D are located on the invalid path. Therefore, the controller may separately send a deletion message to the network node B, the network node C, and the network node D, to instruct the three network nodes to delete the path data that is related to the LSP 1 and that is stored in the three network nodes. The deletion message may be a message of a type (Delete LSP 1) shown in FIG. 8, or may be a message of another type, for example, the foregoing PCUpd message. After receiving the deletion message sent by the controller, the network node B, the network node C, and the network node D may determine, based on the deletion message, that the path data of the LSP 1 needs to be deleted.

Therefore, the path data that is related to the LSP 1 and that originally may remain in the network node C and the network node D is deleted with assistance of the controller, to improve storage efficiency of the two network nodes.

After the case in which the first network node is the head node on the invalid path is described, the following describes a case in which the first network node is the intermediate node on the invalid path.

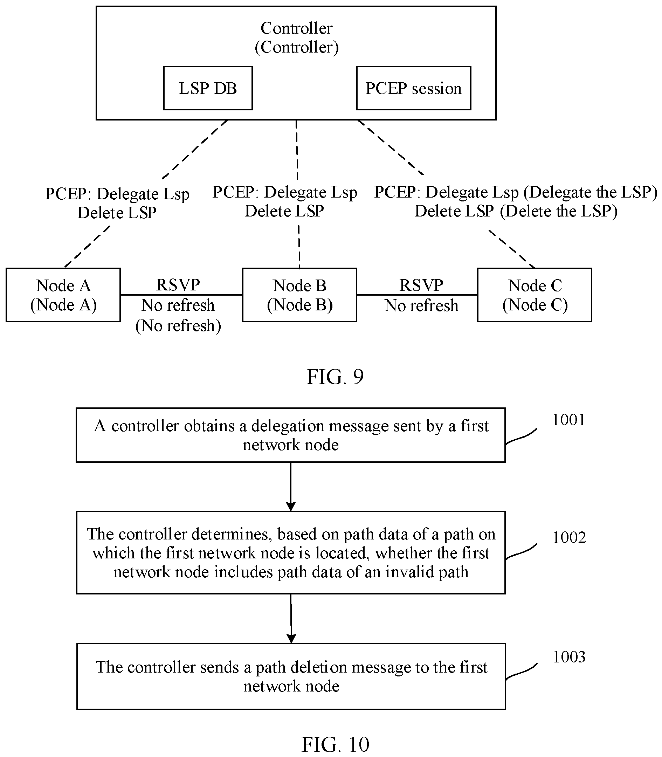

In this scenario, when the invalid path is still valid (referred to as the path 1), a data connection is established between the controller and each network node on the path 1. Therefore, the controller may collect related data of the path 1. The connection relationship may be shown in FIG. 9. A path in a particular protocol, for example, a PCEP path, is established between the controller and each of a network node A (Node A), a network node B (Node B), and a network node C (Node C) on the path 1. Interaction between the controller and the network node A serving as the head node on the path 1 and data transmitted to the controller are similar to interaction between the network node A and the controller in the embodiment corresponding to FIG. 5, and details are not described herein again. Each of the network node B and the network node C serving as intermediate nodes may implement delegation (Delegation) to the controller by using a path to the controller. The delegation means that a network node such as a PCC sends a tunnel of the network node to the controller such as a PCE for management. The tunnel has many attributes. The PCE generally can manage only whether a status of the tunnel is up or down. When a path of a tunnel is invalid (Down), the PCE may require the PCC delegating the tunnel to delete path data of the tunnel. For delegation to the controller, the intermediate node mainly delegates the path-related data. For example, the network node B delegates inbound and outbound interface information of the network node B on the path 1 and an identifier of the network node B to the controller. It should be noted that because one network node may be located on a plurality of paths, for example, the network node B may be located on the path 1: A→B→C, and may be also located on a path 2: B→C→D, delegation of the intermediate node to the controller may be based on a path. In other words, the network node B may perform delegation to the controller for the path 1, and delegated content is related to the path 1; and the network node B may further perform delegation to the controller for the path 2, and delegated content is related to the path 2.

Because the controller obtains delegation permission of the intermediate node on the path, the controller may learn of network nodes included on the path corresponding to the path identifier. From the perspective of the network node, because a path in a particular protocol is established between each network node on the path and the controller, each network node on the path can actively send a message, for example, a delegation message or a path report message, to the controller.

When the first network node is the intermediate node on the invalid path, for how to determine the second network node, refer to a related description when the first network node is the head node on the invalid path. However, it should be noted that a difference from the case in which the first network node is the head node is that in this scenario, a connection in a particular protocol is established between the controller and each network node on the path. Therefore, a manner of determining the second network node is not as complex as the two manners of determining the second network node in the embodiment corresponding to FIG. 5. For example, because the controller has learned of information that is related to the path and that is of the intermediate nodes, the controller may not need to determine the address of the second network node by using a TE DB, but directly determine the address of the second network node by using a PCEP session.

For how to send the path deletion message to the determined second network node when the first network node is the intermediate node on the invalid path, refer to a related description when the first network node is the head node on the invalid path, and details are not described herein again.

With reference to specific application scenarios, the following further describes the case in which the first network node is the intermediate node on the invalid path.

### In a first application scenario:

This scenario mainly focuses on a case of processing performed by the controller when a fourth network node sends a delegation message to the controller. The fourth network node is an intermediate node on the invalid path, and may be same as or may be different from the first network node.

In this case, a processing process may be shown in FIG. 10.

1001. The controller obtains a delegation message sent by the fourth network node, where the delegation message includes an address of the fourth network node and path data of a path on which the fourth network node is located.

1002. The controller determines, based on the path data of the path on which the fourth network node is located, whether the fourth network node includes the path data of the invalid path, and performs 1003 if the fourth network node includes the path data of the invalid path.

The controller may perform the determining in step 1002 based on the obtained identifier of the invalid path; and if finding that a delegation path of the fourth network node is an invalid path, instruct, by using step 1003, the fourth network node to delete the path data related to the path.

The controller may obtain the identifier of the invalid path by using another network node. For example:
The controller may obtain the path report message sent by the first network node, where the path report message is used to indicate that the invalid path needs to be deleted, and the path report message includes the identifier of the invalid path. Alternatively, the controller may obtain a path report message sent by the initial network node (the head node) in the forwarding direction of the invalid path, where the path report message is used to indicate that the invalid path needs to be deleted, and the path report message includes the identifier of the invalid path.

1003. The controller sends a path deletion message to the first network node.

If it can be determined in step 1002 that the first network node includes the path data of the invalid path, the controller may send the path deletion message to the first network node, to assist the first network node in deleting the path data that is of the invalid path and that remains in the first network node.

That when the first network node performs delegation to the controller, the controller finds that the first network node stores the path data of the invalid path may occur in many cases. For example, because a fault occurs on a path between the first network node and another network node on the invalid path, or the first network node is offline, the first network node has not received a path tear message sent by another network node for the invalid path, and consequently, the first network node cannot know a status of the invalid path and continues to maintain the path data of the invalid path. For another example, a fault occurs on a part of the invalid path, and a network node finds the fault and notifies the controller of the fault. In this case, the first network node does not know the fault, and another network node does not send a path tear message for the invalid path. As a result, the first network node still reserves the path data of the invalid path. Examples of other cases are not listed herein one by one.

### In a second application scenario:

This scenario mainly focuses on a case of processing performed by the controller when the first network node sends the path report message to the controller.

Although the first network node on the invalid path (it is assumed that the invalid path is the path 1 before the path is invalid) is the intermediate node, because the first network node has delegated the path 1 to the controller, the first network node may send the path report message to the controller when permitted, to indicate to the controller that the path 1 has been deleted.

Therefore, in step 101, the controller may obtain the identifier of the invalid path by obtaining the path report message sent by the first network node, where the path report message is used to indicate that the invalid path needs to be deleted, and the path report message includes the identifier of the invalid path.

The first network node may be enabled to send the path report message to the controller under a particular condition. For example, a fault occurs on a path between the first network node and the second network node on the invalid path (or the path 1 that is still valid). As a result, the path 1 cannot normally provide a service, and needs to be deleted. In other words, the path 1 becomes the invalid path. The fault on the path between the first network node and the second network node may be found by the first network node. For example, when the first network node finds that a packet forwarded to the second network node is lost or there is no acknowledgement reply, the first network node may determine that the fault occurs on the path between the first network node and the second network node on the path 1.

When the first network node finds that the path 1 cannot normally provide a service, the first network node may consider that the path 1 has become the invalid path, and may send the path report message to controller, to notify the controller that the path 1 has become the invalid path.

The following provides descriptions with reference to two specific scenarios.

In a scenario a, an established path is an LSP 1: A→B→C→D, and a fault occurs on a path from a network node B to a network node C. When the LSP 1 becomes an invalid path, a path tear message sent by the network node B to the network node C is lost. As a result, the network node C does not learn that the LSP 1 has been invalid. The first network node is the network node B.

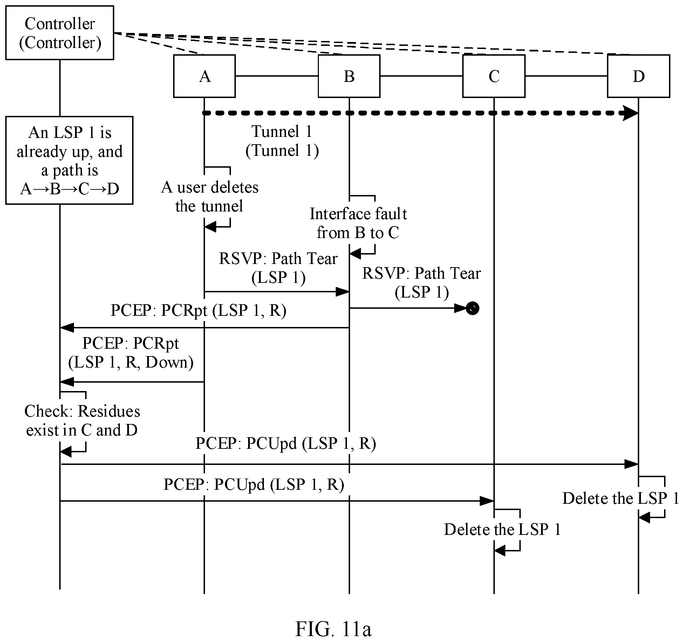

Refer to FIG. 11a for a processing process. After the LSP 1 is established (Up), the controller may obtain path data of the LSP 1 from the network node A. Then, a user may delete the LSP 1, and the LSP 1 becomes the invalid path. The network node A serving as a head node may delete the path data that is of the LSP 1 and that is stored in the network node A, and send an RSVP path tear (LSP 1) message to the network node B, namely, the first network node, to notify the network node B that the LSP 1 has been deleted. The network node B may delete path data related to the LSP 1, and the network node B continues to send the RSVP path tear (LSP 1) message to the network node C. However, because a fault occurs on a path B→C, the RSVP path tear (LSP 1) message sent by the network node B is lost, and cannot be sent to the network node C. As a result, the network node C and the network node D cannot learn that the LSP 1 has been deleted. Consequently, the network node C and the network node D still store the path data of the LSP 1.

Because the network node B does not obtain an acknowledgement message returned by the network node C, the network node B may clearly know that the RSVP path tear (LSP 1) message sent by the network node B is lost due to the fault on the path B→C. The network node B sends a path report message (a PCEP: PCRpt (LSP 1, R) message sent by the network node B to the controller in FIG. 11a) to the controller. The message carries an identifier of the LSP 1 and a flag bit (R) that indicates deletion of the LSP 1, to notify the controller that the LSP 1 has become the invalid path.

When obtaining the PCRpt message, the controller clearly knows that the LSP 1 has become the invalid path; and may determine, based on the identifier of the LSP 1, that the network node C and the network node D are located on the invalid path, and both the two network nodes delegate related information of the LSP 1 to the controller. Therefore, the controller may consider that the network node C and the network node D still store the path data of the LSP 1, and path data remaining in a downstream network device on the invalid path may be understood as downstream residues. The controller may separately send a deletion message to the network node C and the network node D, to instruct the two network nodes to delete the path data that is related to the LSP 1 and that is stored in the two network nodes. The deletion message may be a path deletion message PCEP: PCUpd (LSP 1, R) of a type shown in FIG. 11a. After receiving the path deletion message sent by the controller, the network node C and the network node D determine that the path data of the LSP 1 needs to be deleted.

Therefore, the path data that is related to the LSP 1 and that originally may remain in the network node C and the network node D is deleted with assistance of the controller, to improve storage efficiency of the two network nodes.

In a scenario b, an established path is an LSP 1: A→B→C→D, and a fault occurs on a path from a network node B to a network node A. When the LSP 1 becomes an invalid path, a resv tear message sent by the network node B to the network node A is lost. As a result, the network node A does not learn that the LSP 1 has been invalid. The first network node is the network node B.

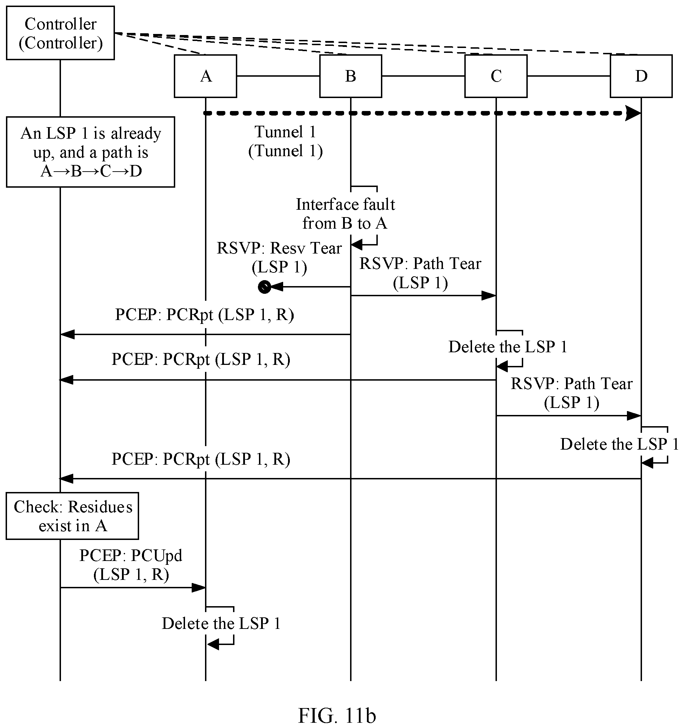

Refer to FIG. 11b for a processing process. After the LSP 1 is established (Up), the controller may obtain path data of the LSP 1 from the network node A. Then, the network node B detects that the fault occurs on the path B→A from the network node B to the network node A, and the network node B determines that the LSP 1 has become the invalid path.

The network node B may delete path data that is related to the LSP 1 and that is stored in the network node B, and send the resv tear message to the network node A. However, the resv tear message is lost due to the fault on B→A. The network node B may further send the RSVP path tear (LSP 1) message to a network node C. Therefore, the network node C may delete path data that is related to the LSP 1 and that is stored in the network node C, and the network node C may continue to send the RSVP path tear (LSP 1) message to a network node D. Therefore, the network node D may delete path data that is related to the LSP 1 and that is stored in the network node D.

The network node B may further send a path report message (a PCEP: PCRpt (LSP 1, R) message sent by the network node B to the controller in FIG. 11b) to the controller when finding that the fault occurs on B→A. The message carries an identifier of the LSP 1 and a flag bit (R) that indicates deletion of the LSP 1, to notify the controller that the LSP 1 has become the invalid path.

When obtaining the PCRpt message, the controller clearly knows that the LSP 1 has become the invalid path, and may determine, based on the identifier of the LSP 1, that the network node A is located on the invalid path. The network node A does not notify the controller that the path data of the LSP 1 has been deleted. Therefore, the controller may consider that the network node A still stores the path data of the LSP 1, and path data remaining in an upstream network device on the invalid path may be understood as upstream residues. The controller may send a deletion message to the network node A, to instruct the network node A to delete the path data that is related to the LSP 1 and that is stored in the network node A. The deletion message may be a path deletion message PCEP: PCUpd (LSP 1, R) of a type shown in FIG. 11b. After receiving the path deletion message sent by the controller, the network node A determines that the path data of the LSP 1 needs to be deleted.

Therefore, the path data that is related to the LSP 1 and that originally may remain in the network node A is deleted with assistance of the controller, to improve storage efficiency of the network node A.

In a scenario c, an established path is an LSP 1: A→B→C→D, and a fault occurs on a path from a network node B to the controller. As a result, a path deletion message sent by the controller to the network node B is lost. If the network node B does not obtain an RSVP path tear (LSP 1) message sent by another network node for the LSP 1, path data of the LSP 1 remains in the network node B. The first network node is the network node B.

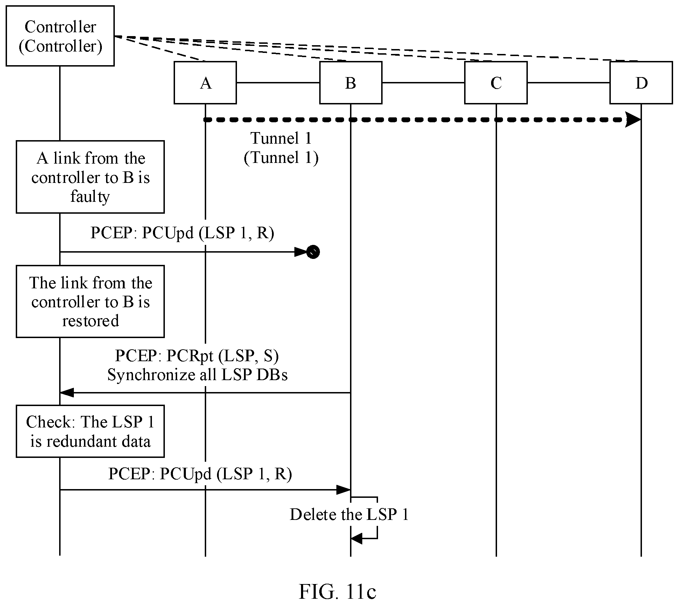

Refer to FIG. 11c for a processing process. The controller has learned that the LSP 1 has been invalid, and sends a path deletion message to a network node on the LSP 1. However, a fault occurs on a path from the controller to the network node B. As a result, the path deletion message sent by the controller to the network node B is lost.

Then, after the path from the network node B to the controller is restored, the network node B may perform delegation to the controller again, or synchronize, with the controller, the path data stored in the network node B again. For example, the network node B may send a PECP: PCRpt (LSP, S) message in FIG. 11c to the controller, to synchronize, with the controller, related information of all LSPs that is currently stored in the network node B.

If the network node B does not obtain the RSVP path tear (LSP 1) message sent by another network node for the LSP 1, and the path data of the LSP 1 remains in the network node B, the controller learns, by using the foregoing data synchronization process, that the network node B still stores the path data of the LSP 1 that has become an invalid path. The controller sends a PCEP PCUpd (LSP 1, R) message to the network node B, to instruct the network node B to delete the path data of the LSP 1.

Therefore, the path data that is related to the LSP 1 and that originally may remain in the network node B is deleted with assistance of the controller, to improve storage efficiency of the network node B.

### In a third application scenario:

This scenario mainly focuses on how the controller processes, when the first network node is the intermediate node on the invalid path, a path change message sent by a head node on the invalid path, namely, a fourth network node.

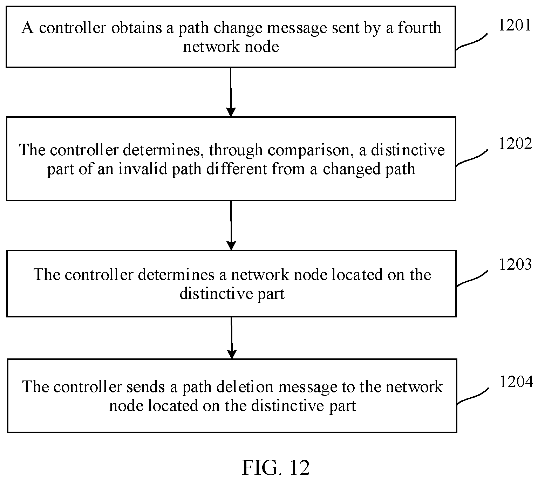

Referring to FIG. 12, based on the embodiment corresponding to FIG. 9, the method may further include the following steps:
1201. The controller obtains a path change message sent by the fourth network node, where the path change message includes a topology structure of a changed path, the changed path is obtained by changing the invalid path, and an identifier of the changed path is the same as the identifier of the invalid path.

Because the identifier of the path before and after the change does not change, this change status may be understood as a change based on an original path, and little content is changed, the path identifier of the original path is still used. For example, the invalid path is A→B→C→D. The invalid path is changed, to obtain the changed path: A→B→C→E. It can be learned that only a last network node on the path is changed. Therefore, the changed path still uses the identifier of the path before the change.

1202. The controller determines, through comparison, a distinctive part of the invalid path different from the changed path.

1203. The controller determines a network node located on the distinctive part.

1204. The controller sends a path deletion message to the network node located on the distinctive part.

The controller may determine the RRO of the invalid path from the LSP DB based on the path identifier, to compare the RRO with a topology structure that is of the changed path and that is carried in the path change message, to determine a difference between the two. For example, in the foregoing example, the invalid path is A→B→C→D, and the changed path is A→B→C→E. Then, the distinctive part is the network node D. The controller may send the path deletion message to the network node D, to instruct the network node D to delete path data that is related to the invalid path and that is stored in the network node D.

It can be learned that for a path that is relatively slightly changed, because most of the changed path still uses related data of the original path, the changed part may be determined through comparison, and the path deletion message is sent only to a network node on the changed part, to improve path data deletion efficiency.

### In a fourth application scenario:

This scenario is mainly described by combining cases that may occur in the foregoing three application scenarios.

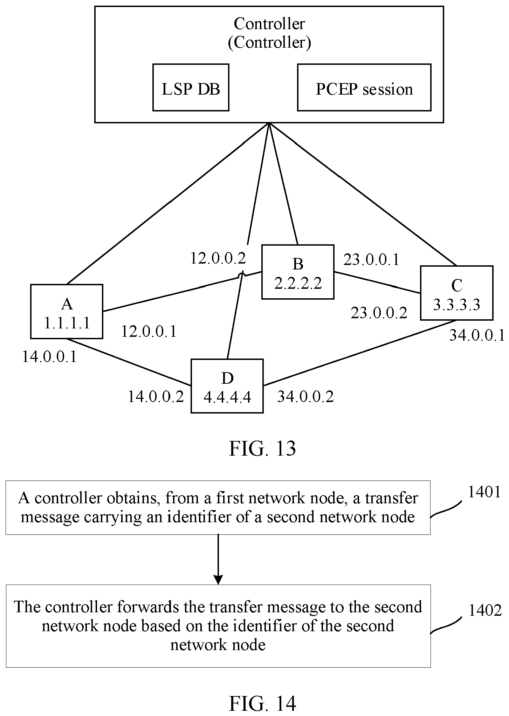

Referring to FIG. 13, content of each database stored in the controller according to FIG. 13 may be shown in Table 2:

**Table 2**

| LSP DB (topology) | PCEP Session |
|---|---|
| PCEP1: | Session 1 1.1.1.2; |
| LSP ID: 1 | Session 2 2.2.2.3; |
| RRO (Current path): 12.0.0.1; 12.0.0.2; 2.2.2.2; | Session 3 3.3.3.4; |
| 23.0.0.1; 23.0.0.2; 3.3.3.3 | Session 4 4.4.4.5 |
| PCEP2: | |
| LSP ID: 1 | |
| HOP: 12.0.0.2; 2.2.2.2; 23.0.0.1 | |
| PCEP3: | |
| LSP ID: 1 | |
| HOP: 23.0.0.2; 3.3.3.3 | |

It can be learned from the LSP DB in the controller that a current path (Current path) of an established (Up) path 1 may be 12.0.0.1→12.0.0.2→2.2.2.2→23.0.0.1→23.0.0.2→3.3.3.3. In other words, a path A→B→C in FIG. 13 is denoted as an LSP 1. In this application scenario, descriptions may be provided with reference to the following three scenarios. In the following scenarios, the first network node may be a network node B.

Scenario a: This scenario mainly focuses on a processing process of the controller when an LSP is deleted.

When the controller obtains a path report message from the network node B (an intermediate network node), the controller determines that the LSP 1 has been deleted and has become an invalid path. The controller determines an RRO of the LSP 1 from the LSP DB based on an identifier of the LSP 1, determines, based on next hop information of the RRO, that a next-hop network node of the network node B on the invalid path is a network node C (the second network node), determines, from a TE DB, that an identifier of the network node C is 3.3.3.3, and determines, from a session DB, that an address of the network node C is 3.3.3.3, so that the controller can send a path deletion message to the address to instruct the network node C to delete path data related to the LSP 1 (the invalid path).

Alternatively, in a small-scale network, the controller may further traverse all stored PCEP sessions, and send the path deletion message to all addresses, to instruct a receiver (a network node) to delete path data related to the LSP 1.

Therefore, after the LSP 1 is deleted, the path data that is related to the LSP 1 and that may remain in the network node C is deleted with assistance of the controller.

Scenario b: This scenario mainly focuses on a processing process of the controller when an RRO changes.

The controller may obtain a path change message from a network node A (the fourth network node), to notify that the LSP 1 changes and an RRO of a new LSP is changed into: 14.0.0.1; 14.0.0.2; 4.4.4.4; 34.0.0.2; 34.0.0.1; and 3.3.3.3 (that is, a new path is A→D→C).

The controller may determine, by using an identifier of the LSP 1, that an RRO of the original LSP 1 is A→B→C, determine, by comparing new and old topology information, that a distinctive part includes a network node B, and find that an address of the network node B is a PCEP 2 in the LSP DB, to send a path deletion message to the network node B, to instruct the network node B to delete path data related to the LSP 1.

Therefore, after the RRO of the LSP 1 changes, the path data that is related to the LSP 1 and that may remain in the network node B is deleted with assistance of the controller.

Scenario c: This scenario mainly focuses on a processing process of the controller when an intermediate node, for example, the first network node: the network node B, delegates the LSP 1 to the controller.

The network node B sends, to the controller, a delegation message used to delegate the LSP 1. When receiving the delegation message, the controller may determine, based on an identifier of the LSP 1, whether the LSP 1 is an invalid path, and if the LSP 1 is the invalid path, the controller may further determine whether the network node B stores path data of the LSP 1. If the network node B stores the path data of the LSP 1, the controller may send a path deletion message to the network node B, to instruct the network node B to delete the path data related to the LSP 1.

Therefore, after the LSP 1 is deleted, the path data that is related to the LSP 1 and that may remain in the network node B is deleted with assistance of the controller.

### Embodiment 2

This embodiment of this application further provides a message forwarding method. The method is also applied to a network in which an RSVP-TE is deployed. The network includes a controller and a plurality of network nodes. The plurality of network nodes include a first network node and a second network node. The controller in the method mainly has a function of forwarding, to the second network node, a transfer message received from the first network node. Therefore, the method is not limited to being applied only to an application scenario of cleaning path data remaining in a network node. Because a manner of forwarding performed by the controller can be used to improve reliability of sending content carried in a transfer message to the second network node, the method may be further applied to another scenario in which a message needs to be forwarded by using the controller or a scenario in which message sending reliability needs to be improved.

FIG. 14 is a method flowchart of the message forwarding method according to this embodiment of this application. The method includes the following steps:

1401. The controller obtains, from the first network node, a transfer message carrying an identifier of the second network node.

1402. The controller forwards the transfer message to the second network node based on the identifier of the second network node.

Both the first network node and the second network node may be network nodes on a same path. To more reliably send content carried in the transfer message to the second network node, the first network node may send the transfer message to the controller, and the controller forwards the transfer message. Because the transfer message carries the identifier of the second network node, when receiving the transfer message, the controller may determine, based on the carried identifier of the network node, a specific network node to which the transfer message needs to be forwarded. The identifier of the second network node may be a destination address of the second network node, or may be an ID used to identify the second network node.

It should be noted that in step 1402, the controller possibly cannot directly determine an actual address of the second network node, that is, an address used to receive a message, based on the identifier that is of the second network node and that is carried in the transfer message. Therefore, the controller needs to search a database such as a TE DB based on the identifier, to obtain the address of the second network node; and forward the transfer message to the address.

The RSVP-TE is improved, so that the first network node can send, to the controller, the transfer message used to instruct the controller to forward the transfer message to the second network node. The transfer message may be a message of an original type in the RSVP-TE. Alternatively, the transfer message may be obtained by improving a message of an original type by improving the RSVP-TE. Alternatively, the transfer message may be of a new message type generated by improving the RSVP-TE.

This embodiment of this application provides an optional manner. The RSVP-TE is improved, to improve a message of an original type: a path computation notify with data (Path Computation Notify with Data, PCNtf with data) message. The improved PCNtf with Data message may have a function of instructing the controller to perform forwarding to a specified network node (the second network node).

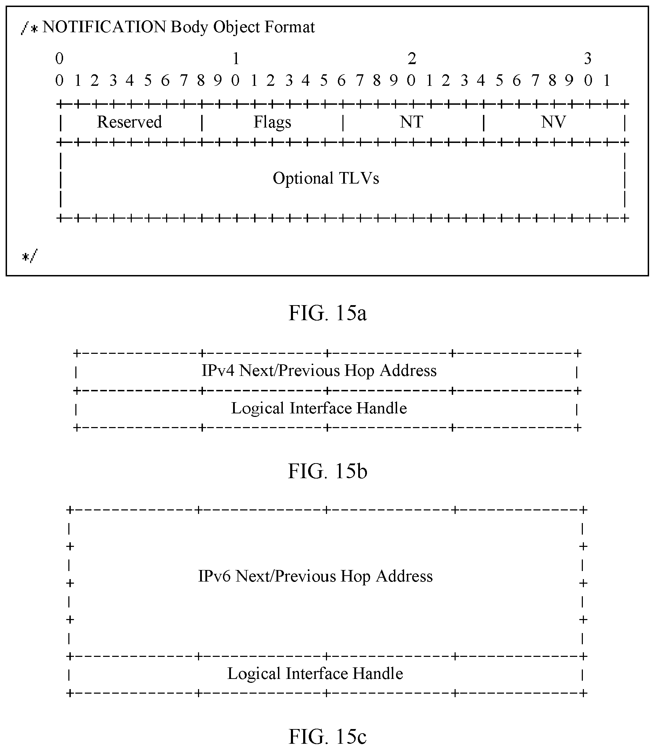

A format of the PCNtf with Data message may be shown in FIG. 15a. An improved part related to this application mainly includes a message type (NT) field, a report message value (NV) field, and an optional type length value (Optional TLVs) field.

The NT field is used to identify a notification type of the PCNtf with Data message. For example, a value of the NV field may be set to 209 to identify that the PCNtf with Data message is a notification message carrying additional data. Therefore, when receiving the PCNtf with Data message, the controller may recognize, by using a value of the NT field, that the PCNtf with Data message is a message that needs to be forwarded to another network node.

The NV field is used to identify a quantity of PCNtf with Data messages sent by the first network node, or may identify a quantity of PCNtf with Data messages that are sent by the first network node and that need to be forwarded to the second network node. For example, the first network node sends a first PCNtf with Data message that needs to be forwarded to the second network node, for example, a notification message 1, and a value of an NV field in the notification message 1 may be 1. Then, the first network node sends a second PCNtf with Data message that needs to be forwarded to the second network node, for example, a notification message 2, and a value of an NV field in the notification message 2 may be obtained by adding 1 to the value of the NV field in the notification message 1. Therefore, the value of the NV field in the notification message 2 is 2. The value of the NV field may have a function of ensuring a time sequence, so that when receiving the PCNtf with Data message, the second network node may determine a processing sequence based on the value of the NV field. For example, due to a status such as a network latency, the second network node first obtains, from the controller, the PCNtf with Data message in which the value of the NV field is 2, and then obtains the PCNtf with Data message in which the value of the NV field is 1. If no NV field has a function of identifying a time sequence, the second network node may first process the first obtained PCNtf with Data message, and then process the latter obtained PCNtf with Data message. This may cause data abnormality. Due to an identification function of the NV field, the second network node may first process the PCNtf with Data message in which the value of the NV field is 1, and then process the PCNtf with Data message in which the value of the NV field is 2, so that a processing sequence is consistent with a sending sequence of the first network node. Therefore, the following case is avoided: Data of the second network node is abnormal because the sequence of processing the PCNtf with Data messages is incorrect.

The optional TLVs field includes a destination address (DESTINATION-HOP TLV) field and an opaque data (OPAQUE-DATA TLV) field.

The destination address field is used to carry an address of a network node receiving the PCNtf with Data message, for example, the identifier of the second network node. A type (Type) part may occupy two bytes, and a length (Length) part may occupy two bytes. It should be noted that a value (Value) part of the destination address field may be in different formats for different application scenarios. For example, a format shown in FIG. 15b is for the Internet protocol version 4 (Internet Protocol version 4, IPv4), and a format shown in FIG. 15c is for the Internet protocol version 6 (Internet Protocol version 6, IPv6). Correspondingly, for the type part of the destination address field, when the value part is in the format shown in FIG. 15b, a value of the type part may be 30; or when the value part is in the format shown in FIG. 15c, a value of the type part may be 31.

The opaque data field is used to carry data that needs to be sent to a network node receiving the PCNtf with Data message. A type part may occupy two bytes, and a length part may occupy two bytes. A value of the type part may be 35, a value of the length part is an actual length of a packet, and a value part may store the data that needs to be sent to the network node receiving the PCNtf with Data message.

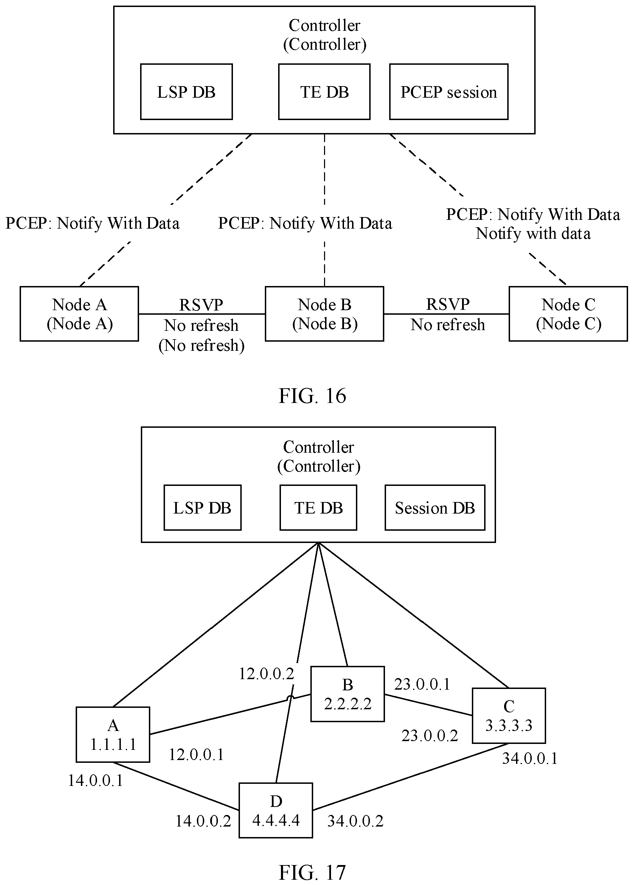

When the transfer message is the PCNtf with Data message, the PCNtf with Data message needs to be improved, and a network node further needs to be improved, so that the network node has a capability of sending the PCNtf with Data message, for example, a notify with data (Notify with Data) capability. Correspondingly, a connection relationship between the network node and the controller may be shown in FIG. 16. A PECP connection is established between the controller and each of a network node A, a network node B, and a network node C, and the PCNtf with Data message may be received or sent by using the connections.

The following describes an opportunity that the first network node sends the transfer message to the controller.

When a message needs to be sent to the second network node, the first network node may send, to the controller by using a process in the embodiment corresponding to FIG. 14, the transfer message carrying the message that needs to be obtained by the second network node, to ensure reliability of obtaining the message by the second network node.

In some particular application scenarios, for example, when a path on which the first network node and the second network node are located becomes an invalid path, the first network node sends the transfer message to the controller, where the transfer message carries a path deletion message used to instruct the second network node to delete path data of the invalid path, to ensure that the second network node can receive the path deletion message, and delete, as instructed by the path deletion message, the path data that is of the invalid path and that is stored in the second network node.

In some particular application scenarios, for example, when a path on which the first network node and the second network node are located becomes an invalid path, and the first network node finds that a path deletion message directly sent to the second network node is lost, the first network node may send the transfer message to the controller, where the transfer message carries the path deletion message used to instruct the second network node to delete the path data of the invalid path, to ensure that the second network node can receive the path deletion message, and delete, as instructed by the path deletion message, the path data that is of the invalid path and that is stored in the second network node.

It should be noted that after the controller forwards the transfer message to the second network node, the controller may further obtain an acknowledgement message returned by the second network node, where the acknowledgement message is used to identify that the second network node has received the transfer message, and the acknowledgement message carries an identifier of the first network node. The acknowledgement message is also a message that needs to be forwarded by the controller. Therefore, after receiving the acknowledgement message, the controller may forward the acknowledgment message to the first network node based on the identifier that is of the first network node and that is carried in the acknowledgement message, to notify the first network node that the second network node has received the transfer message.

Because the acknowledgment message is also a transfer message that needs to be forwarded by the controller, another opportunity of sending the transfer message may be as follows: After a network node a receives a transfer message that is sent by another network node b and that is forwarded by the controller, an acknowledgment reply for the transfer message may be forwarded by the controller to the network node b in a form of a transfer message.

With reference to specific application scenarios, the following further describes the message forwarding method provided in this embodiment of this application.

### In a first application scenario:

**Refer to** **FIG. 17** **for a connection relationship between each network node and a controller and path-related data in the scenario. As shown in** **FIG. 17****, content of each database (Database, DB) stored in the controller may be shown in Table 3:**

**Table 3**

| TE DB (topology) | Session DB |
|---|---|
| Node1: 1.1.1.1 | Session 1 1.1.1.1; |
| link: 12.0.0.1 | Session 2 2.2.2.2; |
| Node2: 2.2.2.2 | Session 3 3.3.3.3; |
| link: 12.0.0.2 23.0.0.1 | Session 4 4.4.4.4 |
| Node3: 3.3.3.3 | |
| link: 23.0.0.2 | |
| Node3: 4.4.4.4 | |
| link: 14.0.0.2 | |

The first network node may be a network node A, the second network node may be a network node B, and the network node A and the network node B are located on a same path. It is assumed that the path becomes an invalid path. If a path deletion message (Path Tear) sent by the network node A to the network node B fails, the network node A may send a transfer message such as a PCNtf with Data message to the controller. The transfer message carries an identifier of the network node B and the path deletion message that needs to be sent to the network node B.

When obtaining the transfer message, the controller may determine, from a TE DB by using the carried identifier of the network node B, that a node IP of the network node B is 2.2.2.2; then search a session DB based on the node IP of the network node B, to find that an address of the network node B is 2.2.2.2; and then forward the PCNtf with Data message to the address of the network node B.

After obtaining the PCNtf with Data message, the network node B may determine, based on the carried path deletion message, that path data that is of the invalid path and that is stored in the network node B needs to be deleted.

### In a second application scenario:

An established path is an LSP 1: A→B→C→D, and a fault occurs on a path from a network node B to a network node C. When the LSP 1 becomes an invalid path, a path tear message sent by the network node B to the network node C is lost. As a result, the network node C does not learn that the LSP 1 has been invalid. The first network node is the network node B, and the second network node is the network node C.

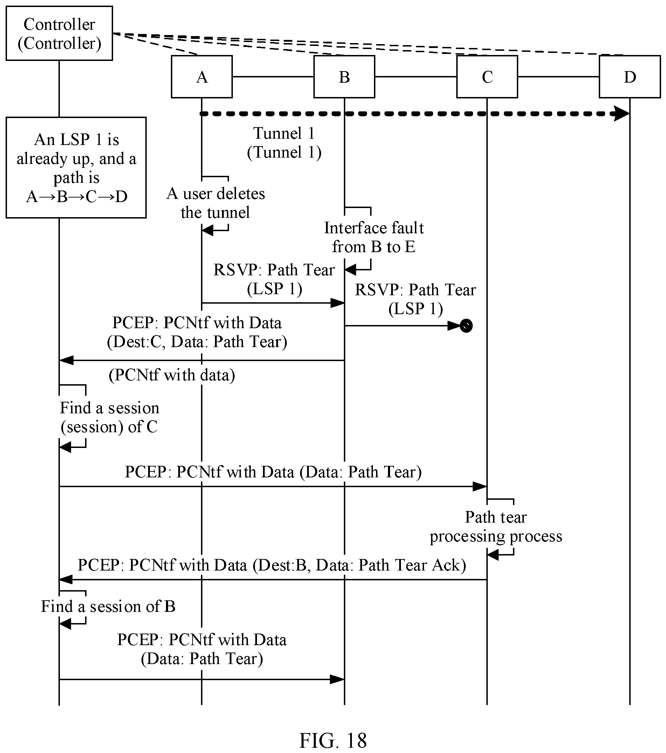

A processing process may be shown in FIG. 18. After the LSP 1 is established (Up), the controller may obtain path data of the LSP 1 from the network node A. Then, a user may delete the LSP 1. The LSP 1 becomes the invalid path. The network node A serving as a head node may delete the path data that is of the LSP 1 and that is stored in the network node A, and send an RSVP path tear (LSP 1) message to the network node B, namely, the first network node, to notify the network node B that the LSP 1 has been deleted. The network node B may delete path data related to the LSP 1, and the network node B continues to send the RSVP path tear (LSP 1) message to the network node C. However, because the fault occurs on the path B→C, the RSVP path tear (LSP 1) message sent by the network node B is lost, and cannot be sent to the network node C. As a result, the network node C and the network node D cannot learn that the LSP 1 has been deleted. Consequently, the network node C and the network node D still store path data of the LSP 1.

Because the network node B does not obtain an acknowledgement message returned by the network node C, the network node B may clearly know that the RSVP path tear (LSP 1) message sent by the network node B is lost due to the fault on the path B→C. The network node B sends a PCNtf with Data message to the controller, where a destination address is the network node C, and additional data is a path tear message for the invalid path.

After determining the address of the network node C based on the PCNtf with Data message, the controller forwards the PCNtf with Data message to the network node C. After obtaining the PCNtf with Data message, the network node C may determine, based on the additional path tear message, that the path data that is of the invalid path and that is stored in the network node C needs to be deleted.

In addition, the network node C may further send a PCNtf with Data message to the controller, where a destination address is the network node B, and additional data is an acknowledgement (ACK) message (equivalent to an acknowledgement message sent by the second network node) indicating that the path tear message for the invalid path has been received.

If the controller receives the PCNtf with Data message, the controller may clearly know, based on the destination address of the PCNtf with Data message, that the PCNtf with Data message needs to be forwarded to the network node B. Therefore, the controller may forward the PCNtf with Data message to the network node B. When receiving the PCNtf with Data message, the network node B may determine that the network node C has received the previously sent PCNtf with Data message that carries the path tear message.

### Embodiment 3

This embodiment is an apparatus embodiment corresponding to Embodiment 1. For related descriptions of features, refer to the descriptions in Embodiment 1. Details are not described herein again.

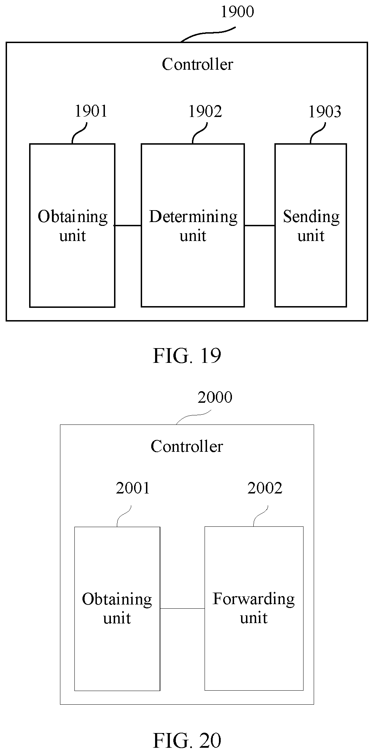

FIG. 19 is an apparatus structural diagram of a path data deletion controller according to an embodiment of this application. The path data deletion controller is applied to a network in which an RSVP-TE is deployed. The network includes a controller 1900 and a plurality of network nodes. The plurality of network nodes include a first network node and a second network node. The controller 1900 includes an obtaining unit 1901, a determining unit 1902, and a sending unit 1903.

The obtaining unit 1901 is configured to obtain an identifier of an invalid path from the first network node, where the first network node is a network node on the invalid path.

The determining unit 1902 is configured to determine the second network node based on the identifier of the invalid path, where the second network node is a network node on the invalid path.

The sending unit 1903 is configured to send a path deletion message to the second network node, where the path deletion message is used to instruct to delete path data related to the invalid path.

Optionally, the second network node is a network node adjacent to the first network node on the invalid path.

Optionally, the first network node is an initial network node in a forwarding direction of the invalid path, and the obtaining unit is further configured to obtain a path report message sent by the first network node, where the path report message is used to indicate that the invalid path needs to be deleted, and the path report message includes the identifier of the invalid path.

Optionally, the controller further includes a judging unit.

The judging unit is configured to: determine whether the second network node is a last network node in the forwarding direction of the invalid path, and if the second network node is not the last network node, trigger the determining unit.

The determining unit is configured to: determine an identifier of a third network node based on a topology structure of the invalid path, where the third network node is a next network node of the second network node in the forwarding direction of the invalid path; and use the third network node as the second network node, and trigger the judging unit.

Optionally, the determining unit is further configured to: determine the topology structure of the invalid path based on the identifier of the invalid path; determine an identifier of the second network node based on the topology structure, where the second network node is a next network node of the first network node in the forwarding direction of the invalid path; and determine an address of the second network node based on the identifier of the second network node.

The sending unit is further configured to send the path deletion message to the second network node based on the address of the second network node.

Optionally, the determining unit is further configured to search for addresses of the plurality of network nodes in the network.

The sending unit is further configured to send the path deletion message to the plurality of network nodes based on the addresses of the plurality of network nodes.

Optionally, the first network node is a network node other than an initial network node in a forwarding direction of the invalid path, and the obtaining unit is further configured to obtain a path report message sent by the first network node, where the path report message is used to indicate that the invalid path needs to be deleted, and the path report message includes the identifier of the invalid path.

Optionally, the obtaining unit is further configured to: if a fault occurs on a path between the second network node and the first network node on the invalid path, obtain the path report message sent by the first network node.

Optionally, the controller further includes a judging unit.

The obtaining unit is further configured to obtain a delegation message sent by a fourth network node, where the delegation message includes an address of the fourth network node and path data of a path on which the fourth network node is located, and the fourth network node is a network node other than the initial network node in the forwarding direction of the invalid path.

The judging unit is configured to: determine, based on the path data of the path on which the fourth network node is located, whether the fourth network node includes the path data of the invalid path; and if the fourth network node includes the path data of the invalid path, trigger the sending unit.

The sending unit is further configured to send the path deletion message to the fourth network node.

Optionally, the obtaining unit obtains the delegation message after obtaining the path report message.

Optionally, a fifth network node is the initial network node in the forwarding direction of the invalid path, and the controller further includes a comparison unit.

The obtaining unit is further configured to obtain a path change message sent by the fifth network node, where the path change message includes a topology structure of a changed path, the changed path is obtained by changing the invalid path, and an identifier of the changed path is the same as the identifier of the invalid path.

The comparison unit is configured to: determine, through comparison, a distinctive part of the invalid path different from the changed path; and determine a network node located on the distinctive part.

The sending unit is further configured to send the path deletion message to the network node located on the distinctive part.

Optionally, the path report message or the delegation message is a PCRpt message, the PCRpt message includes a path field and an LSP object field, the path field is set to be optional, and a flag bit is added to the LSP object field to identify whether a network node sending the PCRpt message is a network node other than an initial network node in a forwarding direction of a path.

Optionally, the path deletion message is a PCUpd message, the PCUpd message includes a path field and an LSP object field, the path field is set to be optional, and a flag bit is added to the LSP object field to identify whether a network node receiving the PCUpd message is a network node other than an initial network node in a forwarding direction of a path.

### Embodiment 4

This embodiment is an apparatus embodiment corresponding to Embodiment 2. For related descriptions of features, refer to the descriptions in Embodiment 2. Details are not described herein again.

FIG. 20 is an apparatus structural diagram of a message forwarding controller according to an embodiment of this application. The message forwarding controller is applied to a network in which an RSVP-TE is deployed. The network includes a controller 2000 and a plurality of network nodes. The plurality of network nodes include a first network node and a second network node. The controller 2000 includes an obtaining unit 2001 and a forwarding unit 2002.

The obtaining unit 2001 is configured to obtain, from the first network node, a transfer message carrying an identifier of the second network node, where the first network node and the second network node are network nodes on a same path.

The forwarding unit 2002 is configured to forward the transfer message to the second network node based on the identifier of the second network node.

Optionally, the forwarding unit is further configured to: determine an address of the second network node based on the identifier of the second network node, and forward the transfer message to the address of the second network node.

Optionally, the transfer message is sent by the first network node when the path becomes an invalid path.

Optionally, the transfer message is sent when a path deletion message sent by the first network node to the second network node is lost.

Optionally, the obtaining unit is further configured to obtain an acknowledgement message returned by the second network node, where the acknowledgement message is used to identify that the second network node has received the transfer message, and the acknowledgement message carries an identifier of the first network node.

Optionally, the forwarding unit is further configured to send the acknowledgement message to the first network node based on the identifier of the first network node.

Optionally, the transfer message or the acknowledgement message is a PCNtf with Data message, an optional type length value field in the PCNtf with Data message includes a destination address field and an opaque data field, the destination address field is used to carry an identifier of a network node receiving the PCNtf with Data message, and the opaque data field is used to carry a message that needs to be received by the network node receiving the PCNtf with Data message.

### Embodiment 5

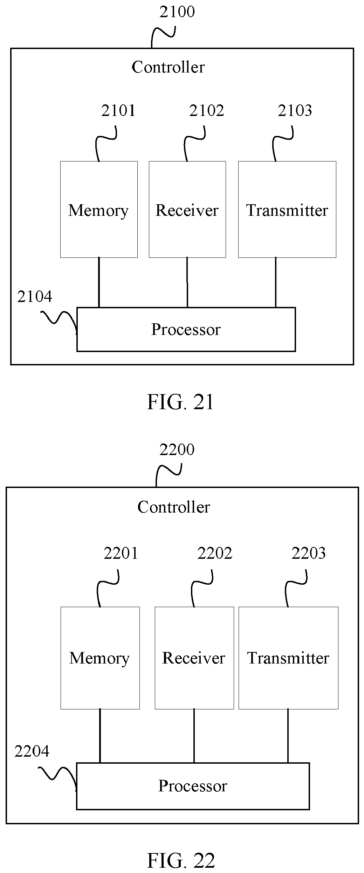

FIG. 21 is a schematic hardware structural diagram of a controller according to an embodiment of this application. The controller is located in a network in which an RSVP-TE is deployed. The network includes a plurality of network nodes. The plurality of network nodes include a first network node and a second network node. A controller 2100 includes a memory 2101, a receiver 2102, a transmitter 2103, and a processor 2104 that is separately connected to the memory 2101, the receiver 2102, and the transmitter 2103. The memory 2101 is configured to store a group of program instructions. The processor 2104 is configured to invoke the program instructions stored in the memory 2101, to perform the following operations:
triggering the receiver 2102 to obtain an identifier of an invalid path from the first network node, where the first network node is a network node on the invalid path;
determining the second network node based on the identifier of the invalid path, where the second network node is a network node on the invalid path; and
triggering the transmitter 2103 to send a path deletion message to the second network node, where the path deletion message is used to instruct to delete path data related to the invalid path.

Optionally, the processor 2104 may be a central processing unit (Central Processing Unit, CPU), the memory 2101 may be an internal memory of a random access memory (Random Access Memory, RAM) type, the receiver 2102 and the transmitter 2103 may include a common physical interface, and the physical interface may be an Ethernet (Ethernet) interface or an asynchronous transfer mode (Asynchronous Transfer Mode, ATM) interface. The processor 2104, the transmitter 2103, the receiver 2102, and the memory 2101 may be integrated into one or more independent circuits or hardware, for example, an application-specific integrated circuit (Application Specific Integrated Circuit, ASIC).

### Embodiment 6

FIG. 22 is a schematic hardware structural diagram of a controller according to an embodiment of this application. The controller is located in a network in which an RSVP-TE is deployed. The network includes a plurality of network nodes. The plurality of network nodes include a first network node and a second network node. A controller 2200 includes a memory 2201, a receiver 2202, a transmitter 2203, and a processor 2204 that is separately connected to the memory 2201, the receiver 2202, and the transmitter 2203. The memory 2201 is configured to store a group of program instructions. The processor 2204 is configured to invoke the program instructions stored in the memory 2201, to perform the following operations:
triggering the receiver 2202 to obtain, from the first network node, a transfer message carrying an identifier of the second network node, where the first network node and the second network node are network nodes on a same path; and
triggering the transmitter 2203 to forward the transfer message to the second network node based on the identifier of the second network node.

Optionally, the processor 2204 may be a CPU, the memory 2201 may be an internal memory of a RAM type, the receiver 2202 and the transmitter 2203 may include a common physical interface, and the physical interface may be an Ethernet interface or an ATM interface. The processor 2204, the transmitter 2203, the receiver 2202, and the memory 2201 may be integrated into one or more independent circuits or hardware, for example, an ASIC.

It may be clearly understood by a person skilled in the art that, for the purpose of convenient and brief description, reference may be made to a corresponding process in the foregoing method embodiments for a detailed working process of the foregoing system, apparatus, and unit, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A path data deletion method, applied to a network in which a resource reservation protocol-traffic engineering RSVP-TE is deployed, wherein the network comprises a controller and a plurality of network nodes, the plurality of network nodes comprise a first network node and a second network node, and the method comprises:
obtaining, by the controller, an identifier of an invalid path from the first network node, wherein the first network node is a network node on the invalid path;
determining, by the controller, the second network node based on the identifier of the invalid path, wherein the second network node is a network node on the invalid path; and
sending, by the controller, a path deletion message to the second network node, wherein the path deletion message is used to instruct to delete path data related to the invalid path.

2. The method according to claim 1, wherein the second network node is a network node adjacent to the first network node on the invalid path.

3. The method according to claim 1, wherein the first network node is an initial network node in a forwarding direction of the invalid path, and the obtaining, by the controller, an identifier of an invalid path from the first network node comprises:
obtaining, by the controller, a path report message sent by the first network node, wherein the path report message is used to indicate that the invalid path needs to be deleted, and the path report message comprises the identifier of the invalid path.

4. The method according to any one of claims 1 to 3, wherein after the sending, by the controller, a path deletion message to the second network node, the method further comprises:
determining, by the controller, whether the second network node is a last network node in the forwarding direction of the invalid path;
if the second network node is not the last network node, determining an identifier of a third network node based on a topology structure of the invalid path, wherein the third network node is a next network node of the second network node in the forwarding direction of the invalid path; and
using the third network node as the second network node, and continuing to perform a step in which the controller determines an address of the second network node based on an identifier of the second network node.

5. The method according to any one of claims 1 to 4, wherein the determining, by the controller, the second network node based on the identifier of the invalid path comprises:
determining, by the controller, the topology structure of the invalid path based on the identifier of the invalid path;
determining, by the controller, the identifier of the second network node based on the topology structure, wherein the second network node is a next network node of the first network node in the forwarding direction of the invalid path; and
determining, by the controller, the address of the second network node based on the identifier of the second network node; and
the sending, by the controller, a path deletion message to the second network node comprises:
sending, by the controller, the path deletion message to the second network node based on the address of the second network node.

6. The method according to any one of claims 1 to 3, wherein the determining, by the controller, the second network node based on the identifier of the invalid path comprises:
searching for, by the controller, addresses of the plurality of network nodes in the network; and
the sending, by the controller, a path deletion message to the second network node comprises:
sending, by the controller, the path deletion message to the plurality of network nodes based on the addresses of the plurality of network nodes.

7. The method according to claim 1 or 2, wherein the first network node is a network node other than an initial network node in a forwarding direction of the invalid path, and the obtaining, by the controller, an identifier of an invalid path from the first network node comprises:
obtaining, by the controller, a path report message sent by the first network node, wherein the path report message is used to indicate that the invalid path needs to be deleted, and the path report message comprises the identifier of the invalid path.

8. The method according to claim 7, wherein the obtaining, by the controller, a path report message sent by the first network node comprises:
if a fault occurs on a path between the second network node and the first network node on the invalid path, obtaining, by the controller, the path report message sent by the first network node.

9. The method according to claim 7, further comprising:
obtaining, by the controller, a delegation message sent by a fourth network node, wherein the delegation message comprises an address of the fourth network node and path data of a path on which the fourth network node is located, and the fourth network node is a network node other than the initial network node in the forwarding direction of the invalid path;
determining, by the controller based on the path data of the path on which the fourth network node is located, whether the fourth network node comprises the path data of the invalid path; and
if the fourth network node comprises the path data of the invalid path, sending, by the controller, the path deletion message to the fourth network node.

10. The method according to claim 9, wherein the controller obtains the delegation message after obtaining the path report message.

11. The method according to claim 7, wherein a fifth network node is the initial network node in the forwarding direction of the invalid path, and the method further comprises:
obtaining, by the controller, a path change message sent by the fifth network node, wherein the path change message comprises a topology structure of a changed path, the changed path is obtained by changing the invalid path, and an identifier of the changed path is the same as the identifier of the invalid path;
determining, by the controller through comparison, a distinctive part of the invalid path different from the changed path;
determining, by the controller, a network node located on the distinctive part; and
sending, by the controller, the path deletion message to the network node located on the distinctive part.

12. The method according to claim 3, 7, or 9, wherein the path report message or the delegation message is a path computation report PCRpt message, the PCRpt message comprises a path field and a label switched path LSP object field, the path field is set to be optional, the LSP object field comprises a flag bit, the flag bit is used to identify whether a network node sending the PCRpt message is a network node other than an initial network node in a forwarding direction of a path.

13. The method according to claim 1, wherein the path deletion message is a path computation update PCUpd message, the PCUpd message comprises a path field and a label switched path LSP object field, the path field is set to be optional, the LSP object field comprises a flag bit, and the flag bit is used to identify whether a network node receiving the PCUpd message is a network node other than an initial network node in a forwarding direction of a path.

14. A path data deletion controller, applied to a network in which a resource reservation protocol-traffic engineering RSVP-TE is deployed, wherein the network comprises the controller and a plurality of network nodes, the plurality of network nodes comprise a first network node and a second network node, and the controller comprises an obtaining unit, a determining unit, and a sending unit, wherein
the obtaining unit is configured to obtain an identifier of an invalid path from the first network node, wherein the first network node is a network node on the invalid path;
the determining unit is configured to determine the second network node based on the identifier of the invalid path, wherein the second network node is a network node on the invalid path; and
the sending unit is configured to send a path deletion message to the second network node, wherein the path deletion message is used to instruct to delete path data related to the invalid path.

15. The controller according to claim 14, wherein the second network node is a network node adjacent to the first network node on the invalid path.

16. The controller according to claim 14, wherein the first network node is an initial network node in a forwarding direction of the invalid path, and the obtaining unit is further configured to obtain a path report message sent by the first network node, wherein the path report message is used to indicate that the invalid path needs to be deleted, and the path report message comprises the identifier of the invalid path.

17. The controller according to any one of claims 14 to 16, wherein the controller further comprises a judging unit, wherein
the judging unit is configured to: determine whether the second network node is a last network node in the forwarding direction of the invalid path, and if the second network node is not the last network node, trigger the determining unit; and
the determining unit is configured to: determine an identifier of a third network node based on a topology structure of the invalid path, wherein the third network node is a next network node of the second network node in the forwarding direction of the invalid path; and use the third network node as the second network node, and trigger the judging unit.

18. The controller according to any one of claims 14 to 17, wherein the determining unit is further configured to: determine the topology structure of the invalid path based on the identifier of the invalid path; determine an identifier of the second network node based on the topology structure, wherein the second network node is a next network node of the first network node in the forwarding direction of the invalid path; and determine an address of the second network node based on the identifier of the second network node; and
the sending unit is further configured to send the path deletion message to the second network node based on the address of the second network node.

19. The controller according to any one of claims 14 to 16, wherein the determining unit is further configured to search for addresses of the plurality of network nodes in the network; and
the sending unit is further configured to send the path deletion message to the plurality of network nodes based on the addresses of the plurality of network nodes.

20. The controller according to claim 14 or 15, wherein the first network node is a network node other than an initial network node in a forwarding direction of the invalid path, and the obtaining unit is further configured to obtain a path report message sent by the first network node, wherein the path report message is used to indicate that the invalid path needs to be deleted, and the path report message comprises the identifier of the invalid path.

21. The controller according to claim 20, wherein the obtaining unit is further configured to: if a fault occurs on a path between the second network node and the first network node on the invalid path, obtain the path report message sent by the first network node.

22. The controller according to claim 20, wherein the controller further comprises a judging unit, wherein
the obtaining unit is further configured to obtain a delegation message sent by a fourth network node, wherein the delegation message comprises an address of the fourth network node and path data of a path on which the fourth network node is located, and the fourth network node is a network node other than the initial network node in the forwarding direction of the invalid path;
the judging unit is configured to: determine, based on the path data of the path on which the fourth network node is located, whether the fourth network node comprises the path data of the invalid path; and if the fourth network node comprises the path data of the invalid path, trigger the sending unit; and
the sending unit is further configured to send the path deletion message to the fourth network node.

23. The controller according to claim 22, wherein the obtaining unit obtains the delegation message after obtaining the path report message.

24. The controller according to claim 20, wherein a fifth network node is the initial network node in the forwarding direction of the invalid path, and the controller further comprises a comparison unit, wherein
the obtaining unit is further configured to obtain a path change message sent by the fifth network node, wherein the path change message comprises a topology structure of a changed path, the changed path is obtained by changing the invalid path, and an identifier of the changed path is the same as the identifier of the invalid path;
the comparison unit is configured to: determine, through comparison, a distinctive part of the invalid path different from the changed path; and determine a network node located on the distinctive part; and
the sending unit is further configured to send the path deletion message to the network node located on the distinctive part.

25. A message forwarding method, applied to a network in which a resource reservation protocol-traffic engineering RSVP-TE is deployed, wherein the network comprises a controller and a plurality of network nodes, the plurality of network nodes comprise a first network node and a second network node, and the method comprises:
obtaining, by the controller from the first network node, a transfer message carrying an identifier of the second network node, wherein the first network node and the second network node are network nodes on a same path; and
forwarding, by the controller, the transfer message to the second network node based on the identifier of the second network node.

26. The method according to claim 25, wherein the forwarding, by the controller, the transfer message to the second network node based on the identifier of the second network node comprises:
determining, by the controller, an address of the second network node based on the identifier of the second network node; and
forwarding, by the controller, the transfer message to the address of the second network node.

27. The method according to claim 25 or 26, wherein the transfer message is sent by the first network node when the path becomes an invalid path.

28. The method according to claim 27, wherein the transfer message is sent when a path deletion message sent by the first network node to the second network node is lost.

29. The method according to any one of claims 25 to 28, further comprising:
obtaining, by the controller, an acknowledgement message returned by the second network node, wherein the acknowledgement message is used to identify that the second network node has received the transfer message, and the acknowledgement message carries an identifier of the first network node.

30. The method according to claim 29, further comprising:
sending, by the controller, the acknowledgement message to the first network node based on the identifier of the first network node.

31. The method according to claim 25 or 29, wherein the transfer message or the acknowledgement message is a path computation notify with data PCNtf with Data message, an optional type length value field in the PCNtf with Data message comprises a destination address field and an opaque data field, the destination address field is used to carry an identifier of a network node receiving the PCNtf with Data message, and the opaque data field is used to carry a message that needs to be received by the network node receiving the PCNtf with Data message.

32. A message forwarding controller, applied to a network in which a resource reservation protocol-traffic engineering RSVP-TE is deployed, wherein the network comprises the controller and a plurality of network nodes, the plurality of network nodes comprise a first network node and a second network node, and the controller comprises an obtaining unit and a forwarding unit, wherein
the obtaining unit is configured to obtain, from the first network node, a transfer message carrying an identifier of the second network node, wherein the first network node and the second network node are network nodes on a same path; and
the forwarding unit is configured to forward the transfer message to the second network node based on the identifier of the second network node.
